(19)

**Europäisches Patentamt**
**European Patent Office**
**Office européen des brevets**

(11) **EP 4 701 191 A1**

(12) **EUROPEAN PATENT APPLICATION**
published in accordance with Art. 153(4) EPC

(43) Date of publication:
**25.02.2026 Bulletin 2026/09**

(21) Application number: **24793063.9**

(22) Date of filing: **19.04.2024**

(51) International Patent Classification (IPC):
$H04N\ 19/577^{(2014.01)}$    $H04N\ 19/119^{(2014.01)}$
$H04N\ 19/176^{(2014.01)}$    $H04N\ 19/157^{(2014.01)}$
$H04N\ 19/105^{(2014.01)}$    $H04N\ 19/513^{(2014.01)}$

(52) Cooperative Patent Classification (CPC):
**H04N 19/105; H04N 19/119; H04N 19/157;**
**H04N 19/176; H04N 19/513; H04N 19/577**

(86) International application number:
**PCT/KR2024/005302**

(87) International publication number:
**WO 2024/219878 (24.10.2024 Gazette 2024/43)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.04.2023 KR 20230051157**
**22.04.2023 US 202363461269 P**

(71) Applicant: **LG Electronics Inc.**
**Yeongdeungpo-gu**
**Seoul 07336 (KR)**

(72) Inventors:
• **AHN, Yongjo**
  **Seoul 06772 (KR)**
• **LIM, Jaehyun**
  **Seoul 06772 (KR)**
• **PARK, Naeri**
  **Seoul 06772 (KR)**
• **NAM, Junghak**
  **Seoul 06772 (KR)**
• **JANG, Hyeongmoon**
  **Seoul 06772 (KR)**

(74) Representative: **Mooser, Sebastian Thomas et al**
**Wuesthoff & Wuesthoff**
**Patentanwälte und Rechtsanwalt PartG mbB**
**Schweigerstraße 2**
**81541 München (DE)**

(54) **METHOD AND DEVICE FOR ENCODING/DECODING IMAGE, AND RECORDING MEDIUM STORING BITSTREAM**

(57)    A method and a device for decoding/encoding an image, according to the present disclosure, may comprise: dividing a current block into a plurality of partitions including a first partition and a second partition; deriving a first prediction block of the first partition; deriving a second prediction block of the second partition; and deriving a prediction block of the current block on the basis of the first prediction block and the second prediction block. Here, at least one of the first prediction block or the second prediction block may be derived by using bidirectional prediction.

FIG.4

```
┌──────────────────────────────────────────────────┐
│ Partition current block into a plurality of       │ ～ S400
│ partitions                                         │
└──────────────────────────────────────────────────┘
                        │
                        ▼
┌──────────────────────────────────────────────────┐
│ Derive prediction block for each partition         │ ～ S410
└──────────────────────────────────────────────────┘
                        │
                        ▼
┌──────────────────────────────────────────────────┐
│ Derive prediction block of current block           │ ～ S420
│ based on prediction block for each partition       │
└──────────────────────────────────────────────────┘
```

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure is to provide a bidirectional prediction method and apparatus for each partition of a current block.

The present disclosure is to provide a method and an apparatus for adjusting bit precision by considering internal/output bit depth.

The present disclosure is to provide a method and an apparatus for effectively deriving and storing information for weighted prediction.

[Technical Solution]

An image decoding method and apparatus according to the present disclosure may partition a current block into a plurality of partitions including a first partition and a second partition, derive a first prediction block of the first partition, derive a second prediction block of the second partition and derive a prediction block of the current block based on the first prediction block and the second prediction block. Here, at least one of the first prediction block or the second prediction block may be derived through bidirectional prediction.

In an image decoding method and apparatus according to the present disclosure, when the first partition performs the bidirectional prediction, a L0 prediction block and a L1 prediction block may be derived for the first partition, and the first prediction block may be derived based on a weighted sum of the L0 prediction block and the L1 prediction block.

In an image decoding method and apparatus according to the present disclosure, a weight for the weighted sum may be determined based on any one of a plurality of weight candidates belonging to a pre-defined weight set.

In an image decoding method and apparatus according to the present disclosure, deriving the first prediction block may include determining a predetermined search range based on a motion vector of the first partition, calculating a cost for each search position within the search range and deriving a L0 prediction block and a L1 prediction block of the first partition based on a search position having a minimum cost among the calculated costs.

In an image decoding method and apparatus according to the present disclosure, the cost may be calculated as a sum of absolute difference (SAD) between a weighted L0 block at the search position and a weighted L1 block corresponding to the weighted L0 block.

In an image decoding method and apparatus according to the present disclosure, deriving the first prediction block may include applying a first illumination compensation parameter to a L0 prediction block of the first partition to generate an illumination-compensated L0 prediction block, applying a second illumination compensation parameter to a L1 prediction block of the first partition to generate an illumination-compensated L1 prediction block and deriving the first prediction block based on a weighted sum of the illumination-compensated L0 prediction block and the illumination-compensated L1 prediction block.

In an image decoding method and apparatus according to the present disclosure, the first illumination compensation parameter may be derived based on a neighboring area of the current block and a neighboring area of the L0 prediction block, and the second illumination compensation parameter may be derived based on a neighboring area of the current block and a neighboring area of the L1 prediction block.

In an image decoding method and apparatus according to the present disclosure, a weight for the weighted sum may be determined based on any one of a plurality of weight candidates belonging to a pre-defined weight set.

In an image decoding method and apparatus according to the present disclosure, a value of a sample of the first prediction block may be derived based on at least one of a value of a sample belonging to a L0 prediction block of the first partition, a value of a sample belonging to a L1 prediction block of the first partition or a predetermined offset.

In an image decoding method and apparatus according to the present disclosure, the offset may be derived based on at least one of horizontal and vertical gradients at a position of a sample belonging to the L0 prediction block or horizontal and vertical gradients at a position of a sample belonging to the L1 prediction block.

In an image decoding method and apparatus according to the present disclosure, each of the first partition and the second partition may be a block encoded in any one of a merge mode, an intra block copy (IBC) mode or a template matching-based prediction (TMP) mode.

In an image decoding method and apparatus according to the present disclosure, a BCW index may be obtained for each of the first partition and the second partition. The BCW index may specify any one of a plurality of weight candidates belonging to a pre-defined weight set.

In an image decoding method and apparatus according to the present disclosure, the current block may be divided into a first area, a second area and a blending area, and any one of a BCW index of the first partition or a BCW index of the second partition may be selectively stored in the blending area.

In an image decoding method and apparatus according to the present disclosure, the first prediction block and the second prediction block may have the same bit precision as an internal bit depth, and a prediction block of the current block may have the same bit precision as an output bit depth.

In an image decoding method and apparatus according to the present disclosure, a L0 prediction block or a L1 prediction block for the first partition and the second partition may have the same bit precision as an internal bit depth, and a first prediction block of the first partition and a second prediction block of the second partition may have the same bit precision as an output bit depth.

An image encoding method and apparatus according to the present disclosure may partition a current block into a plurality of partitions including a first partition and a second partition, derive a first prediction block of the first partition, derive a second prediction block of the second partition and derive a prediction block of the current block based on the first prediction block and the second prediction block. Here, at least one of the first prediction block or the second prediction block may be derived through bidirectional prediction.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and an apparatus for transmitting video/image information generated according to the image encoding method according to the present disclosure are provided.

[Advantageous Effects]

According to the present disclosure, compression efficiency may be improved by allowing bidirectional prediction for each partition of a current block.

According to the present disclosure, in performing bidirectional prediction for each partition of a current block, prediction performance may be improved by adjusting bit precision considering an internal/output bit depth.

According to the present disclosure, the accuracy of bidirectional prediction may be increased and compression efficiency may be improved by applying weighted prediction, illumination compensation, motion vector modification, etc. in performing bidirectional prediction.

According to the present disclosure, information for weighted prediction may be effectively derived and stored.

[Brief Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 shows an inter prediction method performed by a decoding apparatus 300 as an embodiment according to the present disclosure.

FIG. 5 shows a schematic configuration of an inter predictor 332 that performs an inter prediction method according to the present disclosure.

FIG. 6 shows an inter prediction method performed by an encoding apparatus 200 as an embodiment according to the present disclosure.

FIG. 7 shows a schematic configuration of an inter predictor 221 that performs an inter prediction method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

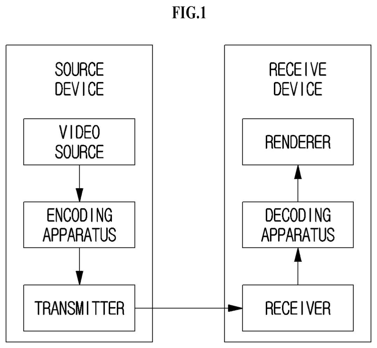

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

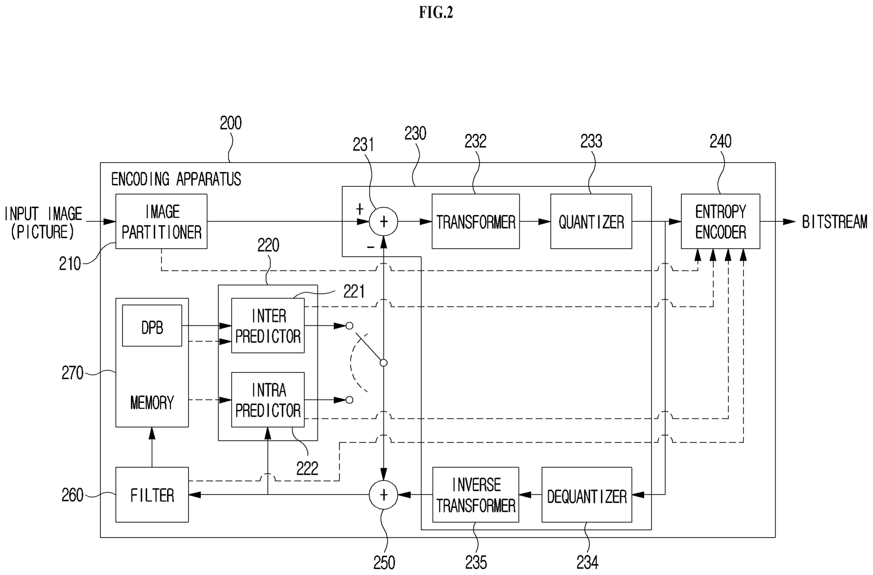

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (LO prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictor 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

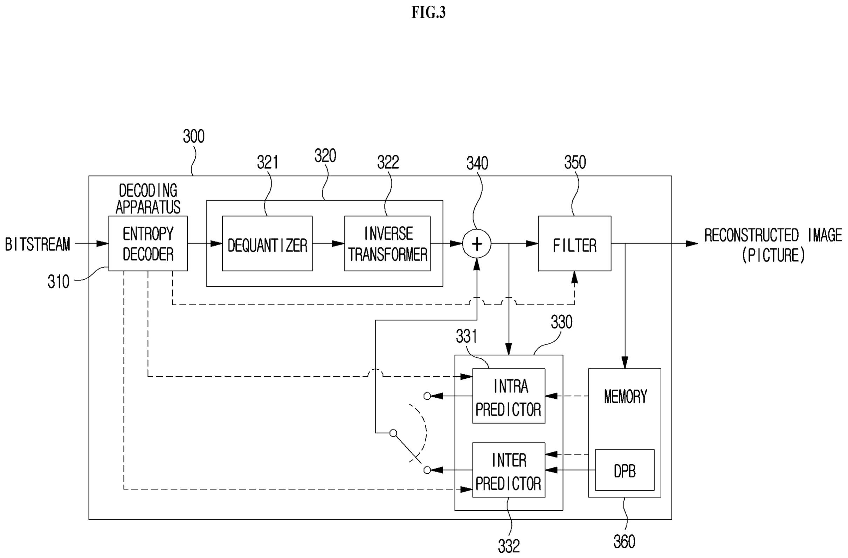

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (LO prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

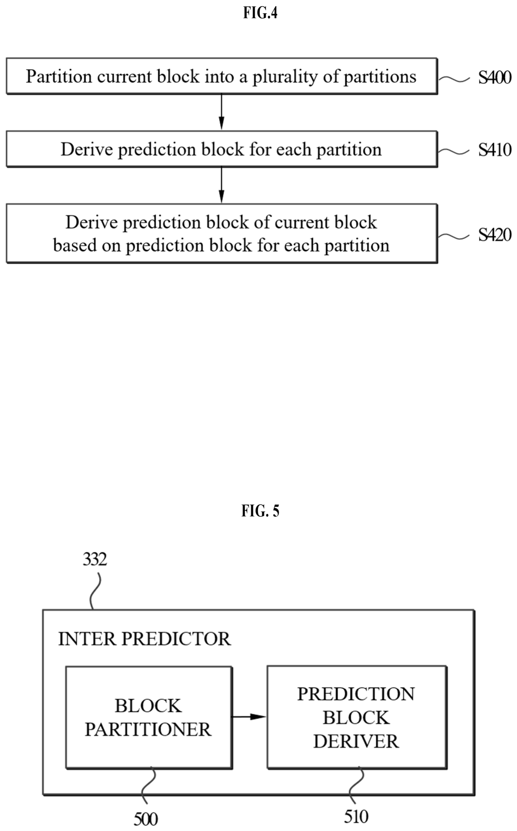

FIG. 4 shows an inter prediction method performed by a decoding apparatus 300 as an embodiment according to the present disclosure.

Referring to FIG. 4, a current block may be partitioned into a plurality of partitions S400.

A current block may be partitioned into two or more partitions based on one or more partitioning lines. As an example, a current block may be partitioned into two or more partitions based on geometric partitioning. The shape of any one of the two or more partitions may be a triangle. Alternatively, the shape of two or more partitions may be a quadrangle.

Referring to FIG. 4, a prediction block may be derived for each partition of a current block S410.

For convenience of a description, it is assumed in the present disclosure that a current block is partitioned into two partitions. Hereinafter, any one of the two partitions is referred to as the first partition and the other of the two partitions is referred to as the second partition.

The first prediction block (P0) may be derived for the first partition of a current block and the second prediction block (P1) may be derived for the second partition of a current block.

The first prediction block of the first partition may be derived by unidirectional prediction. As an example, the first prediction block may be a prediction block derived by inter prediction in a L0 direction (hereinafter, referred to as a L0 prediction block). A L0 prediction block may be defined as a prediction block derived by performing inter prediction based on a L0 reference picture. Alternatively, the first prediction block may be a prediction block derived by inter prediction in a L1 direction (hereinafter, referred to as a L1 prediction block). A L1 prediction block may be defined as a prediction block derived by performing inter prediction based on a L1 reference picture.

The first prediction block of the first partition may be derived by bidirectional prediction. As an example, a L0 prediction block and a L1 prediction block may be derived for the first partition, respectively, and the first prediction block may be derived based on the L0 prediction block and the L1 prediction block.

Similarly, the second prediction block of the second partition may be derived by unidirectional prediction. As an example, the second prediction block may be a L0 prediction block. Alternatively, the second prediction block may be a L1 prediction block. Alternatively, the second prediction block of the second partition may be derived by bidirectional prediction. As an example, a L0 prediction block and a L1 prediction block may be derived for the second partition, respectively, and the second prediction block may be derived based on the L0 prediction block and the L1 prediction block.

Hereinafter, a method for deriving the first prediction block and the second prediction block of a current block is described in detail.

Embodiment 1

When the first partition performs bidirectional prediction (i.e., when the first partition has motion information for bidirectional prediction), a L0 prediction block and a L1 prediction block may be derived for the first partition. The first prediction block of the first partition may be derived based on the weighted sum of a L0 prediction block and a L1 prediction block. As an example, the first prediction block may be derived as shown in Equation 1 below.

[Equation 1]

$$P_0 = (w_{00} * P_{00} + w_{01} * P_{01} + round) \gg shift$$

In Equation 1, $P_0$ represents the first prediction block. $P_{00}$ represents the L0 prediction block of the first partition and $P_{01}$ represents the L1 prediction block of the first partition. $w_{00}$ and $w_{01}$ represent a weight for the bidirectional prediction of the first partition. round represents a rounding offset for rounding and shift represents a parameter for weighted average (i.e., a scale-down parameter). Here, $w_{00}$ and $w_{01}$ may be set equally as a value of ($2^{shift-1}$). In this case, $P_0$ may be derived as the average value of $P_{00}$ and $P_{01}$.

When the second partition performs bidirectional prediction (i.e., when the second partition has motion information for bidirectional prediction), a L0 prediction block and a L1 prediction block may be derived for the second partition. The second prediction block of the second partition may be derived based on the weighted sum of a L0 prediction block and a L1 prediction block. As an example, the second prediction block may be derived as shown in Equation 2 below.

[Equation 2]

$$P_1 = (w_{10} * P_{10} + w_{11} * P_{11} + round) \gg shift$$

In Equation 2, $P_1$ represents the second prediction block. $P_{10}$ represents the L0 prediction block of the second partition and $P_{11}$ represents the L1 prediction block of the second partition. $w_{10}$ and $w_{11}$ represent a weight for the bidirectional prediction of the second partition. round represents a rounding offset for rounding and shift represents a parameter for weighted average (i.e., a scale-down parameter). Here, $w_{10}$ and $w_{11}$ may be set equally as a value of ($2^{shift-1}$). In this case, $P_1$ may be derived as the average value of $P_{10}$ and $P_{11}$.

Embodiment 2

When the first partition performs bidirectional prediction, a L0 prediction block and a L1 prediction block may be derived for the first partition. The first prediction block of the first partition may be derived by applying BCW (bi-prediction with CU-level weight) to the L0 prediction block and the L1 prediction block of the first partition. In other words, the first prediction block may be derived based on the weighted average of the L0 prediction block and the L1 prediction block of the first partition.

A weight for the weighted average may be determined based on a weight set pre-defined equally for an encoding apparatus and a decoding apparatus. The weight set may include a plurality of weight candidates. The number of weight candidates belonging to a weight set may be an integer of 2, 3, 4, 5 or more. At least one of a plurality of weight candidates may be a negative number. As an example, a weight set may be defined as {-2, 3, 4, 5, 10}.

A weight for the weighted average may be determined based on any one of a plurality of weight candidates belonging to a weight set. For this purpose, an index specifying any one of the plurality of weight candidates (hereinafter, referred to as a BCW index) may be used. As an example, a weight for the weighted average may include a weight ($w_{00}$) applied to the L0 prediction block of the first partition and a weight ($w_{01}$) applied to the L1 prediction block of the first partition. $w_{00}$ may be derived as a weight candidate specified by a BCW index among a plurality of weight candidates. $w_{01}$ may be derived as a value of ($1-w_{00}$). Alternatively, $w_{01}$ may be set as a weight candidate specified by a BCW index among a plurality of weight candidates. $w_{00}$ may be derived as a value of ($1-w_{01}$).

On the other hand, when the first partition performs unidirectional prediction, the above-described BCW may not be applied when deriving the first prediction block of the first partition. In this case, the first prediction block of the first partition may be derived as any one of a L0 or L1 prediction block.

Similarly, when the second partition performs bidirectional prediction, a L0 prediction block and a L1 prediction block may be derived for the second partition. The second prediction block of the second partition may be derived by applying BCW to the L0 prediction block and the L1 prediction block of the second partition. In other words, the second prediction block may be derived based on the weighted average of the L0 prediction block and the L1 prediction block of the second partition.

A weight for the weighted average may be derived in the same manner as the first partition. Specifically, a weight for the weighted average may be determined based on any one of a plurality of weight candidates belonging to a weight set. For this purpose, a BCW index representing any one of the plurality of weight candidates may be used. As an example, a weight for the weighted average may include a weight ($w_{10}$) applied to the L0 prediction block of the second partition and a weight ($w_{11}$) applied to the L1 prediction block of the second partition. $w_{10}$ may be derived as a weight candidate specified by a BCW index among a plurality of weight candidates. $w_{11}$ may be derived as a value of ($1-w_{10}$). Alternatively, $w_{11}$ may be derived as a weight candidate specified by a BCW index among a plurality of weight candidates. $w_{10}$ may be derived as a value of ($1-w_{11}$).

On the other hand, when the second partition performs unidirectional prediction, the above-described BCW may not be applied when deriving the second prediction block of the second partition. In this case, the second prediction block of the second partition may be derived as any one of a L0 or L1 prediction block.

When the BCW index of the first partition and the BCW index of the second partition are different, a weight used when deriving the first prediction block of the first partition and a weight used when deriving the second prediction block of the second partition may be different. On the other hand, when the BCW index of the first partition and the BCW index of the second partition are the same, a weight used when deriving the first prediction block of the first partition and a weight used when deriving the second prediction block of the second partition may be the same.

Embodiment 3

When the first partition performs bidirectional prediction, the first prediction block of the first partition may be derived based on decoder side motion vector refinement (DMVR).

Specifically, a predetermined search range may be determined based on the motion vector of the first partition. The search range may be limited to $\pm N$ sample sizes in horizontal and vertical directions, centering around a position indicated by the motion vector of the first partition. N may be an integer of 1, 2 or more. As an example, when N is 2, the search range may be defined as a 5x5 area using a position indicated by the motion vector of the first partition as a center position. In this case, the number of search positions within a search range may be 25.

A cost may be calculated for each search position within the search range. Here, a cost may be calculated as the sum of absolute difference (SAD) between a L0 block and a L1 block at a corresponding search position.

A search position having the minimum cost among the calculated costs may be determined. The motion vector of the first partition may be modified to a motion vector indicating a search position having the minimum cost. A L0 block and a L1 block at a search position indicated by the modified motion vector may be set as the L0 prediction block and the L1 prediction block of the first partition, respectively. The first prediction block of the first partition may be derived based on the weighted sum of a L0 prediction block and a L1 prediction block derived in the above-described way.

On the other hand, when the first partition performs unidirectional prediction, the above-described DMVR may not be applied when deriving the first prediction block of the first partition. In this case, the first prediction block of the first partition may be derived as any one of a L0 or L1 prediction block.

When the second partition performs bidirectional prediction, the second prediction block of the second partition may be derived based on DMVR as described above.

Specifically, a predetermined search range may be determined based on the motion vector of the second partition. The search range may be limited to $\pm N$ sample sizes in horizontal and vertical directions, centering around a position indicated by the motion vector of the second partition, which is the same as described above.

A cost may be calculated for each search position within the search range. Here, a cost may be calculated as the sum of absolute difference (SAD) between a L0 block and a L1 block at a corresponding search position.

A search position having the minimum cost among the calculated costs may be determined. The motion vector of the second partition may be modified to a motion vector indicating a search position having the minimum cost. A L0 block and a L1 block at a search position indicated by the modified motion vector may be set as the L0 prediction block and the L1 prediction block of the second partition. The second prediction block of the second partition may be derived based on the weighted sum of a L0 prediction block and a L1 prediction block derived in the above-described way.

On the other hand, when the second partition performs unidirectional prediction, the above-described DMVR may not be applied when deriving the second prediction block of the second partition. In this case, the second prediction block of the second partition may be derived as any one of a L0 or L1 prediction block.

The above-described DMVR may partition a current block into sub-blocks of a predetermined size and perform the modification of a motion vector in the unit of a sub-block. Here, the size of a sub-block may be 16x16. However, it is not limited thereto, and the size of a sub-block may be 8x8 or 4x4. Alternatively, the shape of a sub-block is not limited to a square shape, and may be a non-square shape such as 16x8 or 8x4. Alternatively, the above-described DMVR may perform the modification of a motion vector in the sample unit of 1x1.

Embodiment 4

When the first partition performs bidirectional prediction, the first prediction block of the first partition may be derived based on decoder side motion vector refinement (DMVR).

Specifically, a predetermined search range may be determined based on the motion vector of the first partition. The search range may be limited to $\pm N$ sample sizes in horizontal and vertical directions, centering around a position indicated by the motion vector of the first partition. N may be an integer of 1, 2 or more. As an example, when N is 2, the search range may be defined as a 5x5 area using a position indicated by the motion vector of the first partition as a center position. In this case, the number of search positions within a search range may be 25.

A cost may be calculated for each search position within the search range. A predetermined weight for BCW (bi-prediction with CU-level weight) may be applied to a L0 block and a L1 block at a search position, respectively. In this case, the cost may be calculated as the sum of absolute difference (SAD) between the weighted L0 block and L1 block. Here, the weight may be determined based on a weight set pre-defined equally for an encoding apparatus and a decoding apparatus. The weight set may include a plurality of weight candidates. The number of weight candidates belonging to a weight set may be an integer of 2, 3, 4, 5 or more. At least one of a plurality of weight candidates may be a negative number. As an example, a weight set may be defined as {-2, 3, 4, 5, 10}. The weight may be determined based on any one of a plurality of weight candidates belonging to a weight set. For this purpose, a BCW index specifying any one of the plurality of weight candidates may be used. As an example, the weight may include a weight ($w_{00}$) applied to a L0 block and a weight ($w_{01}$) applied to a L1 block. $w_{00}$ may be derived as a weight candidate specified by a BCW index among a plurality of weight candidates. $w_{01}$ may be derived as a value of ($1-w_{00}$). Alternatively, $w_{01}$ may be set as a weight candidate specified by a BCW index among a plurality of weight candidates. $w_{00}$ may be derived as a value of ($1-w_{01}$).

A search position having the minimum cost among the calculated costs may be determined. The motion vector of the first partition may be modified to a motion vector indicating a search position having the minimum cost. A L0 block and a L1 block at a search position indicated by the modified motion vector may be set as the L0 prediction block and the L1 prediction block of the first partition.

The first prediction block of the first partition may be derived by applying a weight ($w_{00}$) and a weight ($w_{01}$) derived based on the BCW index to a L0 prediction block and a L1 prediction block derived in the above-described manner, respectively.

On the other hand, when the first partition performs unidirectional prediction, the above-described DMVR may not be applied when deriving the first prediction block of the first partition. In this case, the first prediction block of the first partition may be derived as any one of a L0 or L1 prediction block.

When the second partition performs bidirectional prediction, the second prediction block of the second partition may be derived based on DMVR as described above.

Specifically, a predetermined search range may be determined based on the motion vector of the second partition. The search range may be limited to ±N sample sizes in horizontal and vertical directions, centering around a position indicated by the motion vector of the second partition, which is the same as described above.

A cost may be calculated for each search position within the search range. A predetermined weight for BCW may be applied to a L0 block and a L1 block at a search position, respectively. In this case, the cost may be calculated as the sum of absolute difference (SAD) between the weighted L0 block and L1 block. Here, the weight may be determined based on a weight set pre-defined equally for an encoding apparatus and a decoding apparatus. The weight set may include a plurality of weight candidates. The number of weight candidates belonging to a weight set may be an integer of 2, 3, 4, 5 or more. At least one of a plurality of weight candidates may be a negative number. As an example, a weight set may be defined as {-2, 3, 4, 5, 10}. The weight may be determined based on any one of a plurality of weight candidates belonging to a weight set. For this purpose, a BCW index specifying any one of the plurality of weight candidates may be used. As an example, the weight may include a weight ($w_{10}$) applied to a L0 block and a weight ($w_{11}$) applied to a L1 block. $w_{10}$ may be derived as a weight candidate specified by a BCW index among a plurality of weight candidates. $w_{11}$ may be derived as a value of (1-$w_{10}$). Alternatively, $w_{11}$ may be set as a weight candidate specified by a BCW index among a plurality of weight candidates. $w_{10}$ may be derived as a value of (1-$w_{11}$).

A search position having the minimum cost among the calculated costs may be determined. The motion vector of the second partition may be modified to a motion vector indicating a search position having the minimum cost. A L0 block and a L1 block at a search position indicated by the modified motion vector may be set as the L0 prediction block and the L1 prediction block of the second partition.

The second prediction block of the second partition may be derived by applying a weight ($w_{10}$) and a weight ($w_{11}$) derived based on the BCW index to a L0 prediction block and a L1 prediction block derived in the above-described manner, respectively.

On the other hand, when the second partition performs unidirectional prediction, the above-described DMVR may not be applied when deriving the second prediction block of the second partition. In this case, the second prediction block of the second partition may be derived as any one of a L0 or L1 prediction block.

The above-described DMVR may partition a current block into sub-blocks of a predetermined size and perform the modification of a motion vector in the unit of a sub-block. Here, the size of a sub-block may be 16x16. However, it is not limited thereto, and the size of a sub-block may be 8x8 or 4x4. Alternatively, the shape of a sub-block is not limited to a square shape, and may be a non-square shape such as 16x8 or 8x4. Alternatively, the above-described DMVR may perform the modification of a motion vector in the sample unit of 1x1.

Embodiment 5

Illumination compensation according to the present disclosure may represent a method for generating the final prediction block of a current block by applying a predetermined illumination compensation parameter to the reference block of a current block. Specifically, an illumination compensation parameter may be derived based on the neighboring area of a current block and the neighboring area of a reference block. In other words, the illumination compensation parameter of a linear model may be derived based on a luma difference (or variation) between the neighboring area of a current block and the neighboring area of a reference block. The neighboring area, as a pre-reconstructed area, may include at least one of a top neighboring area, a left neighboring area, a top-left neighboring area, a bottom-left neighboring area or a top-right neighboring area. The reference block may be specified based on the motion vector of a current block. The illumination compensation parameter of the linear model may be applied to a reference block to generate the final prediction block of a current block.

A relational expression for compensating for a luma difference between a current block and a reference block may be defined as shown in Equation 3 below.

[Equation 3]

$$Cur_N(x,y) = \alpha * Ref_N(x,y) + \beta$$

In Equation 3, $\alpha$ and $\beta$ represent an illumination compensation parameter. $Ref_N(x,y)$ may refer to the neighboring area of a reference block and $Cur_N(x,y)$ may refer to the neighboring area of a current block. An illumination compensation parameter may include a weight($\alpha$) and an offset($\beta$) that minimize a luma difference between $Ref_N(x,y)$ and $Cur_N(x,y)$. The values of $\alpha$ and $\beta$ above may be applied to the reference block of a current block to generate a prediction block that is illumination-compensated for a current block.

An illumination compensation parameter according to the present disclosure may be derived from at least one unit of a picture, a tile, a slice, a coding tree unit (CTU) or a coding unit (CU). The illumination compensation may be adaptively applied based on an illumination compensation flag. The illumination compensation flag may represent whether illumination compensation is applied to the reference block of a current block. Alternatively, the illumination compensation flag may represent whether the prediction block of a current block is modified through illumination compensation. The illumination compensation flag may be signaled through a bitstream or may be derived from an encoding apparatus and a decoding apparatus.

When the first partition performs bidirectional prediction, a L0 prediction block and a L1 prediction block may be derived for the first partition. Illumination compensation may be applied to the L0 prediction block and the L1 prediction block of the first partition, respectively. The first prediction block of the first partition may be derived based on the weighted sum of illumination-compensated L0 and L1 prediction blocks.

Specifically, an illumination compensation parameter for a L0 prediction block may be derived based on the neighboring area of a current block and the neighboring area of a L0 prediction block for the first partition. The derived illumination compensation parameter may be applied to a L0 prediction block to generate an illumination-compensated L0 prediction block. Similarly, an illumination compensation parameter for a L1 prediction block may be derived based on the neighboring area of a current block and the neighboring area of a L1 prediction block for the first partition. The derived illumination compensation parameter may be applied to a L1 prediction block to generate an illumination-compensated L1 prediction block. The first prediction block of the first partition may be derived based on the weighted sum of the illumination-compensated L0 and L1 prediction blocks.

On the other hand, when the first partition performs unidirectional prediction, a L0 or L1 prediction block may be derived for the first partition. Illumination compensation may be applied to the L0 or L1 prediction block of the first partition. In other words, an illumination compensation parameter may be derived based on the neighboring area of a current block and the neighboring area of a L0 or L1 prediction block, and the illumination compensation parameter may be applied to a L0 or L1 prediction block. The illumination-compensated L0 or L1 prediction block may be set as the first prediction block of the first partition.

When the second partition performs bidirectional prediction, a L0 prediction block and a L1 prediction block may be derived for the second partition. Illumination compensation may be applied to the L0 prediction block and the L1 prediction block of the second partition, respectively. The first prediction block of the first partition may be derived based on the weighted sum of illumination-compensated L0 and L1 prediction blocks.

Specifically, an illumination compensation parameter for a L0 prediction block may be derived based on the neighboring area of a current block and the neighboring area of a L0 prediction block for the second partition. The derived illumination compensation parameter may be applied to a L0 prediction block to generate an illumination-compensated L0 prediction block. Similarly, an illumination compensation parameter for a L1 prediction block may be derived based on the neighboring area of a current block and the neighboring area of a L1 prediction block for the second partition. The derived illumination compensation parameter may be applied to a L1 prediction block to generate an illumination-compensated L1 prediction block. The second prediction block of the second partition may be derived based on the weighted sum of the illumination-compensated L0 and L1 prediction blocks.

On the other hand, when the second partition performs unidirectional prediction, a L0 or L1 prediction block may be derived for the second partition. Illumination compensation may be applied to the L0 or L1 prediction block of the second partition. In other words, an illumination compensation parameter may be derived based on the neighboring area of a current block and the neighboring area of a L0 or L1 prediction block, and the illumination compensation parameter may be applied to a L0 or L1 prediction block. The illumination-compensated L0 or L1 prediction block may be set as the second prediction block of the second partition.

Embodiment 6

When the first partition performs bidirectional prediction, a L0 prediction block and a L1 prediction block may be derived for the first partition. Illumination compensation may be applied to the L0 prediction block and the L1 prediction block of the first partition, respectively. The first prediction block of the first partition may be derived by applying BCW (bi-prediction with CU-level weight) to illumination-compensated L0 and L1 prediction blocks. Illumination compensation according to the present disclosure is the same as described in Embodiment 5, and an overlapping description will be omitted here.

Specifically, an illumination compensation parameter for a L0 prediction block may be derived based on the neighboring area of a current block and the neighboring area of a L0 prediction block for the first partition. The derived illumination compensation parameter may be applied to a L0 prediction block to generate an illumination-compensated L0 prediction block. Similarly, an illumination compensation parameter for a L1 prediction block may be derived based on the neighboring area of a current block and the neighboring area of a L1 prediction block for the first partition. The derived illumination compensation parameter may be applied to a L1 prediction block to generate an illumination-compensated L1 prediction block. The first prediction block of the first partition may be derived based on the weighted average of the illumination-compensated L0 and L1 prediction blocks. A weight for the weighted average is the same as described in Embodiment 2, and an overlapping description will be omitted here.

On the other hand, when the first partition performs unidirectional prediction, a L0 or L1 prediction block may be derived for the first partition. Illumination compensation may be applied to the L0 or L1 prediction block of the first partition. In other words, an illumination compensation parameter may be derived based on the neighboring area of a current block and the neighboring area of a L0 or L1 prediction block, and the illumination compensation parameter may be applied to a L0 or L1 prediction block. The illumination-compensated L0 or L1 prediction block may be set as the first prediction block of the first partition. Since it is a case in which the first partition performs unidirectional prediction, the above-described BCW may not be applied when deriving the first prediction block of the first partition.

When the second partition performs bidirectional prediction, a L0 prediction block and a L1 prediction block may be derived for the second partition. Illumination compensation may be applied to the L0 prediction block and the L1 prediction block of the second partition, respectively. The second prediction block of the second partition may be derived by applying BCW to illumination-compensated L0 and L1 prediction blocks.

Specifically, an illumination compensation parameter for a L0 prediction block may be derived based on the neighboring area of a current block and the neighboring area of a L0 prediction block for the second partition. The derived illumination compensation parameter may be applied to a L0 prediction block to generate an illumination-compensated L0 prediction block. Similarly, an illumination compensation parameter for a L1 prediction block may be derived based on the neighboring area of a current block and the neighboring area of a L1 prediction block for the second partition. The derived illumination compensation parameter may be applied to a L1 prediction block to generate an illumination-compensated L1 prediction block. The second prediction block of the second partition may be derived based on the weighted average of the illumination-compensated L0 and L1 prediction blocks. A weight for the weighted average is the same as described in Embodiment 2, and an overlapping description will be omitted here.

On the other hand, when the second partition performs unidirectional prediction, a L0 or L1 prediction block may be derived for the second partition. Illumination compensation may be applied to the L0 or L1 prediction block of the second partition. In other words, an illumination compensation parameter may be derived based on the neighboring area of a current block and the neighboring area of a L0 or L1 prediction block, and the illumination compensation parameter may be applied to a L0 or L1 prediction block. The illumination-compensated L0 or L1 prediction block may be set as the second prediction block of the second partition. Since it is a case in which the second partition performs unidirectional prediction, the above-described BCW may not be applied when deriving the second prediction block of the second partition.

Embodiment 7

When the first partition performs bidirectional prediction, the first prediction block of the first partition may be derived based on decoder side motion vector refinement (DMVR).

Specifically, a predetermined search range may be determined based on the motion vector of the first partition. The search range may be limited to $\pm$N sample sizes in horizontal and vertical directions, centering around a position indicated by the motion vector of the first partition. N may be an integer of 1, 2 or more. As an example, when N is 2, the search range may be defined as a 5x5 area using a position indicated by the motion vector of the first partition as a center position. In this case, the number of search positions within a search range may be 25.

A cost may be calculated for each search position within the search range. Here, a cost may be calculated as the sum of absolute difference (SAD) between a L0 block and a L1 block at a corresponding search position.

A search position having the minimum cost among the calculated costs may be determined. The motion vector of the first partition may be modified to a motion vector indicating a search position having the minimum cost. A L0 block and a L1 block at a search position indicated by the modified motion vector may be set as the L0 prediction block and the L1 prediction block of the first partition, respectively.

Illumination compensation may be applied to a L0 prediction block and a L1 prediction block derived in the above-described way. An illumination compensation parameter for a L0 prediction block may be derived based on the neighboring area of a current block and the neighboring area of the derived L0 prediction block. The derived illumination compensation parameter may be applied to a L0 prediction block to generate an illumination-compensated L0 prediction block. Similarly, an illumination compensation parameter for a L1 prediction block may be derived based on the neighboring area of a current block and the neighboring area of the derived L1 prediction block. The derived illumination compensation parameter may be applied to a L1 prediction block to generate an illumination-compensated L1 prediction block. The first prediction block of the first partition may be derived based on the weighted sum of the illumination-compensated L0 and L1 prediction blocks.

On the other hand, when the first partition performs unidirectional prediction, the above-described DMVR may not be applied when deriving the first prediction block of the first partition. In this case, the first prediction block of the first partition may be derived as any one of a L0 or L1 prediction block. Alternatively, the first prediction block of the first partition may be derived as any one of an illumination-compensated L0 or L1 prediction block.

When the second partition performs bidirectional prediction, the second prediction block of the second partition may be derived based on DMVR as described above.

Specifically, a predetermined search range may be determined based on the motion vector of the second partition. The search range may be limited to ±N sample sizes in horizontal and vertical directions, centering around a position indicated by the motion vector of the second partition, which is the same as described above.

A cost may be calculated for each search position within the search range. Here, a cost may be calculated as the sum of absolute difference (SAD) between a L0 block and a L1 block at a corresponding search position.

A search position having the minimum cost among the calculated costs may be determined. The motion vector of the second partition may be modified to a motion vector indicating a search position having the minimum cost. A L0 block and a L1 block at a search position indicated by the modified motion vector may be set as the L0 prediction block and the L1 prediction block of the second partition, respectively.

Illumination compensation may be applied to a L0 prediction block and a L1 prediction block derived in the above-described way. An illumination compensation parameter for a L0 prediction block may be derived based on the neighboring area of a current block and the neighboring area of the derived L0 prediction block. The derived illumination compensation parameter may be applied to a L0 prediction block to generate an illumination-compensated L0 prediction block. Similarly, an illumination compensation parameter for a L1 prediction block may be derived based on the neighboring area of a current block and the neighboring area of the derived L1 prediction block. The derived illumination compensation parameter may be applied to a L1 prediction block to generate an illumination-compensated L1 prediction block. The first prediction block of the first partition may be derived based on the weighted sum of the illumination-compensated L0 and L1 prediction blocks.

On the other hand, when the second partition performs unidirectional prediction, the above-described DMVR may not be applied when deriving the second prediction block of the second partition. In this case, the second prediction block of the second partition may be derived as any one of a L0 or L1 prediction block. Alternatively, the second prediction block of the second partition may be derived as any one of an illumination-compensated L0 or L1 prediction block.

The above-described DMVR may partition a current block into sub-blocks of a predetermined size and perform the modification of a motion vector in the unit of a sub-block. Here, the size of a sub-block may be 16x16. However, it is not limited thereto, and the size of a sub-block may be 8x8 or 4x4. Alternatively, the shape of a sub-block is not limited to a square shape, and may be a non-square shape such as 16x8 or 8x4. Alternatively, the above-described DMVR may perform the modification of a motion vector in the sample unit of 1x1.

Embodiment 8

When the first partition performs bidirectional prediction, the first prediction block of the first partition may be derived based on decoder side motion vector refinement (DMVR).

Specifically, a predetermined search range may be determined based on the motion vector of the first partition. The search range may be limited to ±N sample sizes in horizontal and vertical directions, centering around a position indicated by the motion vector of the first partition. N may be an integer of 1, 2 or more. As an example, when N is 2, the search range may be defined as a 5x5 area using a position indicated by the motion vector of the first partition as a center position. In this case, the number of search positions within a search range may be 25.

A cost may be calculated for each search position within the search range. Illumination compensation may be applied to a L0 block and a L1 block at a search position, respectively. In this case, a cost may be calculated as the sum of absolute difference (SAD) between the illumination-compensated L0 block and L1 block.

In other words, an illumination compensation parameter for the L0 block may be derived based on the neighboring area of a current block and the neighboring area of a L0 block at a corresponding search position. The derived illumination compensation parameter may be applied to a L0 block to generate an illumination-compensated L0 block. Similarly, an illumination compensation parameter for the L1 block may be derived based on the neighboring area of a current block and the neighboring area of a L1 block at a corresponding search position. The derived illumination compensation parameter may be applied to a L1 block to generate an illumination-compensated L1 block. The SAD between the illumination-compensated L0 and L1 blocks may be calculated as a cost.

A search position having the minimum cost among the calculated costs may be determined. The motion vector of the first partition may be modified to a motion vector indicating a search position having the minimum cost. A L0 block and a L1 block at a search position indicated by the modified motion vector may be set as the L0 prediction block and the L1 prediction block of the first partition, respectively.

Illumination compensation may be applied to a L0 prediction block and a L1 prediction block derived in the above-described way. An illumination-compensated L0 prediction block may be generated by applying an illumination compensation parameter pre-derived for a L0 block at a search position indicated by the modified motion vector to the L0 prediction block. In addition, an illumination-compensated L1 prediction block may be generated by applying an illumination compensation parameter pre-derived for a L1 block at a search position indicated by the modified motion vector to the L1 prediction block. The first prediction block of the first partition may be derived based on the weighted sum of the illumination-compensated L0 and L1 prediction blocks.

On the other hand, when the first partition performs unidirectional prediction, the above-described DMVR may not be applied when deriving the first prediction block of the first partition. In this case, the first prediction block of the first partition may be derived as any one of a L0 or L1 prediction block. Alternatively, the first prediction block of the first partition may be derived as any one of an illumination-compensated L0 or L1 prediction block.

When the second partition performs bidirectional prediction, the second prediction block of the second partition may be derived based on DMVR as described above.

Specifically, a predetermined search range may be determined based on the motion vector of the second partition. The search range may be limited to $\pm N$ sample sizes in horizontal and vertical directions, centering around a position indicated by the motion vector of the second partition, which is the same as described above.

A cost may be calculated for each search position within the search range. Illumination compensation may be applied to a L0 block and a L1 block at a search position, respectively. In this case, a cost may be calculated as the SAD between the illumination-compensated L0 block and L1 block.

In other words, an illumination compensation parameter for the L0 block may be derived based on the neighboring area of a current block and the neighboring area of a L0 block at a corresponding search position. The derived illumination compensation parameter may be applied to a L0 block to generate an illumination-compensated L0 block. Similarly, an illumination compensation parameter for the L1 block may be derived based on the neighboring area of a current block and the neighboring area of a L1 block at a corresponding search position. The derived illumination compensation parameter may be applied to a L1 block to generate an illumination-compensated L1 block. The SAD between the illumination-compensated L0 and L1 blocks may be calculated as a cost.

A search position having the minimum cost among the calculated costs may be determined. The motion vector of the second partition may be modified to a motion vector indicating a search position having the minimum cost. A L0 block and a L1 block at a search position indicated by the modified motion vector may be set as the L0 prediction block and the L1 prediction block of the second partition, respectively.

Illumination compensation may be applied to a L0 prediction block and a L1 prediction block derived in the above-described way. An illumination-compensated L0 prediction block may be generated by applying an illumination compensation parameter pre-derived for a L0 block at a search position indicated by the modified motion vector to the L0 prediction block. In addition, an illumination-compensated L1 prediction block may be generated by applying an illumination compensation parameter pre-derived for a L1 block at a search position indicated by the modified motion vector to the L1 prediction block. The second prediction block of the second partition may be derived based on the weighted sum of the illumination-compensated L0 and L1 prediction blocks.

On the other hand, when the second partition performs unidirectional prediction, the above-described DMVR may not be applied when deriving the second prediction block of the second partition. In this case, the second prediction block of the second partition may be derived as any one of a L0 or L1 prediction block. Alternatively, the second prediction block of the second partition may be derived as any one of an illumination-compensated L0 or L1 prediction block.

The above-described DMVR may partition a current block into sub-blocks of a predetermined size and perform the modification of a motion vector in the unit of a sub-block. Here, the size of a sub-block may be 16x16. However, it is not limited thereto, and the size of a sub-block may be 8x8 or 4x4. Alternatively, the shape of a sub-block is not limited to a square shape, and may be a non-square shape such as 16x8 or 8x4. Alternatively, the above-described DMVR may perform the modification of a motion vector in the sample unit of 1x1.

Embodiment 9

When the first partition performs bidirectional prediction, the first prediction block of the first partition may be derived based on decoder side motion vector refinement (DMVR).

Specifically, a predetermined search range may be determined based on the motion vector of the first partition. The search range may be limited to $\pm N$ sample sizes in horizontal and vertical directions, centering around a position indicated by the motion vector of the first partition. N may be an integer of 1, 2 or more. As an example, when N is 2, the search range may be defined as a 5x5 area using a position indicated by the motion vector of the first partition as a center position. In this case, the number of search positions within a search range may be 25.

A cost may be calculated for each search position within the search range. Illumination compensation may be applied to a L0 block and a L1 block at a search position, respectively. A predetermined weight for BCW (bi-prediction with CU-level weight) may be applied to the illumination-compensated L0 block and L1 block, respectively. In this case, a cost may be calculated as the sum of absolute difference (SAD) between the weighted L0 block and L1 block. A weight for the BCW is the same as described in Embodiment 2, and an overlapping description will be omitted here.

In other words, an illumination compensation parameter for the L0 block may be derived based on the neighboring area of a current block and the neighboring area of a L0 block at a corresponding search position. The derived illumination compensation parameter may be applied to a L0 block to generate an illumination-compensated L0 block. Similarly, an illumination compensation parameter for the L1 block may be derived based on the neighboring area of a current block and the neighboring area of a L1 block at a corresponding search position. The derived illumination compensation parameter may be applied to a L1 block to generate an illumination-compensated L1 block. The weighted L0 block and L1 block may be generated by applying a weight derived based on a BCW index to the illumination-compensated L0 block and L1 block, respectively. The SAD between the weighted L0 block and L1 block may be calculated as a cost.

A search position having the minimum cost among the calculated costs may be determined. The motion vector of the first partition may be modified to a motion vector indicating a search position having the minimum cost. A L0 block and a L1 block at a search position indicated by the modified motion vector may be set as the L0 prediction block and the L1 prediction block of the first partition, respectively.

Illumination compensation may be applied to a L0 prediction block and a L1 prediction block derived in the above-described way. An illumination-compensated L0 prediction block may be generated by applying an illumination compensation parameter pre-derived for a L0 block at a search position indicated by the modified motion vector to the L0 prediction block. In addition, an illumination-compensated L1 prediction block may be generated by applying an illumination compensation parameter pre-derived for a L1 block at a search position indicated by the modified motion vector to the L1 prediction block. The first prediction block may be derived based on the weighted average of the illumination-compensated L0 and L1 prediction blocks. In other words, the first prediction block of the first partition may be derived by applying a weight ($w_{00}$) and a weight ($w_{01}$) derived based on the BCW index to the illumination-compensated L0 and L1 prediction blocks, respectively.

On the other hand, when the first partition performs unidirectional prediction, the above-described DMVR and BCW may not be applied when deriving the first prediction block of the first partition. In this case, the first prediction block of the first partition may be derived as any one of a L0 or L1 prediction block. Alternatively, the first prediction block of the first partition may be derived as any one of an illumination-compensated L0 or L1 prediction block.

When the second partition performs bidirectional prediction, the second prediction block of the second partition may be derived based on DMVR as described above.

Specifically, a predetermined search range may be determined based on the motion vector of the second partition. The search range may be limited to $\pm$N sample sizes in horizontal and vertical directions, centering around a position indicated by the motion vector of the second partition, which is the same as described above.

A cost may be calculated for each search position within the search range. Illumination compensation may be applied to a L0 block and a L1 block at a search position, respectively. A predetermined weight for BCW may be applied to the illumination-compensated L0 block and L1 block, respectively. In this case, a cost may be calculated as the SAD between the weighted L0 block and L1 block. A weight for the BCW is the same as described in Embodiment 2, and an overlapping description will be omitted here.

In other words, an illumination compensation parameter for the L0 block may be derived based on the neighboring area of a current block and the neighboring area of a L0 block at a corresponding search position. The derived illumination compensation parameter may be applied to a L0 block to generate an illumination-compensated L0 block. Similarly, an illumination compensation parameter for the L1 block may be derived based on the neighboring area of a current block and the neighboring area of a L1 block at a corresponding search position. The derived illumination compensation parameter may be applied to a L1 block to generate an illumination-compensated L1 block. The weighted L0 block and L1 block may be generated by applying a weight derived based on a BCW index to the illumination-compensated L0 block and L1 block, respectively. The SAD between the weighted L0 block and L1 block may be calculated as a cost.

A search position having the minimum cost among the calculated costs may be determined. The motion vector of the second partition may be modified to a motion vector indicating a search position having the minimum cost. A L0 block and a L1 block at a search position indicated by the modified motion vector may be set as the L0 prediction block and the L1 prediction block of the second partition, respectively.

Illumination compensation may be applied to a L0 prediction block and a L1 prediction block derived in the above-described way. An illumination-compensated L0 prediction block may be generated by applying an illumination compensation parameter pre-derived for a L0 block at a search position indicated by the modified motion vector to the L0 prediction block. In addition, an illumination-compensated L1 prediction block may be generated by applying an illumination compensation parameter pre-derived for a L1 block at a search position indicated by the modified motion vector to the L1 prediction block. The second prediction block may be derived based on the weighted average of the illumination-compensated L0 and L1 prediction blocks. In other words, the second prediction block of the second partition may be derived by applying a weight ($w_{10}$) and a weight ($w_{11}$) derived based on the BCW index to the illumination-compensated L0 and L1 prediction blocks, respectively.

On the other hand, when the second partition performs unidirectional prediction, the above-described DMVR and BCW may not be applied when deriving the second prediction block of the second partition. In this case, the second prediction block of the second partition may be derived as any one of a L0 or L1 prediction block. Alternatively, the second prediction block of the second partition may be derived as any one of an illumination-compensated L0 or L1 prediction block.

The above-described DMVR may partition a current block into sub-blocks of a predetermined size and perform the modification of a motion vector in the unit of a sub-block. Here, the size of a sub-block may be 16x16. However, it is not limited thereto, and the size of a sub-block may be 8x8 or 4x4. Alternatively, the shape of a sub-block is not limited to a square shape, and may be a non-square shape such as 16x8 or 8x4. Alternatively, the above-described DMVR may perform the modification of a motion vector in the sample unit of 1x1.

Embodiment 10

BDOF (Bi-directional optical flow) according to the present disclosure may find an optimal motion vector in the unit of a predetermined sub-block based on a bidirectional motion vector obtained in the unit of a coding block and derive a final prediction block by estimating a sample value variation at each sample position within a coding block based on an optimal motion vector. The sub-block is a 4x4 block, but is not limited thereto.

When the first partition performs bidirectional prediction, a L0 prediction block and a L1 prediction block may be derived for the first partition. When deriving the first prediction block of the first partition based on the L0 prediction block and the L1 prediction block of the first partition, BDOF may be applied.

When the BDOF is applied, the sample value ($pred0_{BDOF}$) of the first prediction block may be derived based on the sample value ($pred0_0$) of the L0 prediction block of the first partition, the sample value ($pred0_1$) of the L1 prediction block of the first partition and a predetermined offset ($Offset0_{BDOF}$) for the BDOF of the first partition. Here, a predetermined offset may be derived based on at least one of a horizontal/vertical gradient at the sample position of the $pred0_0$ or a horizontal/vertical gradient at the sample position of $pred0_1$. As an example, a predetermined offset may be derived as shown in Equation 4 below.

[Equation 4]

$$Offset0_{BDOF}(i,j) = v0_x * (gradH0_0(i,j) - gradH0_1(i,j)) + v0_y * (gradV0_0(i,j) - gradV0_1(i,j))$$

In Equation 4, $offset0_{BDOF}(i,j)$ represents an offset corresponding to the sample position of $(i,j)$. $v0_x$ and $v0_y$ may refer to a modified motion vector that minimizes distortion between the L0 prediction block and the L1 prediction block of the first partition. $v0_x$ and $v0_y$ may be derived in the unit of a sub-block within a current block. $gradH0_0(i,j)$ represents a horizontal gradient at the sample position of $(i,j)$ within the L0 prediction block of the first partition. $gradH0_1(i,j)$ represents a horizontal gradient at the sample position of $(i,j)$ within the L1 prediction block of the first partition. $gradV0_0(i,j)$ represents a vertical gradient at the sample position of $(i,j)$ within the L0 prediction block of the first partition. $gradV0_1(i,j)$ represents a vertical gradient at the sample position of $(i,j)$ within the L1 prediction block of the first partition. The horizontal gradient may be a variation in at least two samples horizontally adjacent to the sample position of $(i,j)$. The vertical gradient may be a variation in at least two samples vertically adjacent to the sample position of $(i,j)$.

On the other hand, when the first partition performs unidirectional prediction, the above-described BDOF may not be applied when deriving the first prediction block of the first partition. In this case, the first prediction block of the first partition may be derived as any one of a L0 or L1 prediction block.

When the second partition performs bidirectional prediction, a L0 prediction block and a L1 prediction block may be derived for the second partition. When deriving the second prediction block of the second partition based on the L0 prediction block and the L1 prediction block of the second partition, BDOF may be applied.

When the BDOF is applied, the sample value ($pred1_{BDOF}$) of the second prediction block may be derived based on the sample value ($pred1_0$) of the L0 prediction block of the second partition, the sample value ($pred1_1$) of the L1 prediction block of the second partition and a predetermined offset ($Offset1_{BDOF}$) for the BDOF of the second partition. Here, a predetermined offset may be derived based on at least one of a horizontal/vertical gradient at the sample position of the $pred1_0$ or a horizontal/vertical gradient at the sample position of $pred1_1$. As an example, a predetermined offset may be derived as shown in Equation 5 below.

[Equation 5]

$$Offset1_{BDOF}(i,j) = v1_x * (gradH1_0(i,j) - gradH1_1(i,j)) + v1_y * (gradV1_0(i,j) - gradV1_1(i,j))$$

In Equation 5, $Offset1_{BDOF}(i,j)$ represents an offset corresponding to the sample position of $(i,j)$. $v1_x$ and $v1_y$ may refer to a modified motion vector that minimizes distortion between the L0 prediction block and the L1 prediction block of the second partition. $v1_x$ and $v1_y$ may be derived in the unit of a sub-block within a current block. $gradH1_0(i,j)$ represents a horizontal gradient at the sample position of $(i,j)$ within the L0 prediction block of the second partition. $gradH1_1(i,j)$ represents a horizontal gradient at the sample position of $(i,j)$ within the L1 prediction block of the second partition. $gradv1_0(ij)$ represents a vertical gradient at the sample position of $(i,j)$ within the L0 prediction block of the second partition. $gradV1_1(i,j)$ represents a vertical gradient at the sample position of $(i,j)$ within the L1 prediction block of the second partition. The horizontal gradient may be a variation in at least two samples horizontally adjacent to the sample position of $(i,j)$. The vertical gradient may be a variation in at least two samples vertically adjacent to the sample position of $(i,j)$.

On the other hand, when the second partition performs unidirectional prediction, the above-described BDOF may not be applied when deriving the second prediction block of the second partition. In this case, the second prediction block of the second partition may be derived as any one of a L0 or L1 prediction block.

Embodiment 11

When the first partition performs bidirectional prediction, a L0 prediction block and a L1 prediction block may be derived for the first partition. The first prediction block of the first partition may be derived by applying BCW (bi-prediction with CU-level weight) and BDOF (Bi-directional optical flow) to the L0 prediction block and the L1 prediction block of the first partition.

In other words, the sample value of the first prediction block may be derived based on at least one of a value derived through the weighted average of the sample value of the L0 prediction block and the sample value of the L1 prediction block of the first partition or an offset for the BDOF of the first partition. A weight for the weighted average may be derived based on the BCW index of the first partition, which is the same as described in Embodiment 2. In addition, an offset for the BDOF of the first partition is the same as described in Embodiment 10.

On the other hand, when the first partition performs unidirectional prediction, the above-described BCW and BDOF may not be applied when deriving the first prediction block of the first partition. In this case, the first prediction block of the first partition may be derived as any one of a L0 or L1 prediction block.

When the second partition performs bidirectional prediction, a L0 prediction block and a L1 prediction block may be derived for the second partition. The second prediction block of the second partition may be derived by applying the BCW and BDOF to the L0 prediction block and the L1 prediction block of the second partition.

In other words, the sample value of the second prediction block may be derived based on at least one of a value derived through the weighted average of the sample value of the L0 prediction block and the sample value of the L1 prediction block of the second partition or an offset for the BDOF of the second partition. A weight for the weighted average may be derived based on the BCW index of the second partition, which is the same as described in Embodiment 2. In addition, an offset for the BDOF of the second partition is the same as described in Embodiment 10.

On the other hand, when the second partition performs unidirectional prediction, the above-described BCW and BDOF may not be applied when deriving the second prediction block of the second partition. In this case, the second prediction block of the second partition may be derived as any one of a L0 or L1 prediction block.

Embodiment 12

When the first partition performs bidirectional prediction, a L0 prediction block and a L1 prediction block may be derived for the first partition. In this case, the L0 prediction block and the L1 prediction block of the first partition may be derived based on DMVR (decoder side motion vector refinement). A method for deriving L0/L1 prediction blocks based on the DMVR is the same as described in Embodiment 3, and an overlapping description will be omitted here.

The first prediction block of the first partition may be derived by applying BDOF (Bi-directional optical flow) to the L0 prediction block and the L1 prediction block of the first partition derived based on the DMVR. In other words, the L0 and L1 prediction blocks of the first partition may be derived based on DMVR. The sample value of the first prediction block of the first partition may be derived based on at least one of the weighted sum of the sample value of the derived L0 prediction block and the sample value of the L1 prediction block or an offset for the BDOF of the first partition. An offset for the BDOF of the first partition is the same as described in Embodiment 10.

On the other hand, when the first partition performs unidirectional prediction, the above-described DMVR and BDOF may not be applied when deriving the first prediction block of the first partition. In this case, the first prediction block of the first partition may be derived as any one of a L0 or L1 prediction block.

When the second partition performs bidirectional prediction, a L0 prediction block and a L1 prediction block may be derived for the second partition. In this case, the L0 prediction block and the L1 prediction block of the second partition may be derived based on DMVR. A method for deriving LO/L1 prediction blocks based on the DMVR is the same as described in Embodiment 3, and an overlapping description will be omitted here.

The second prediction block of the second partition may be derived by applying BDOF to the L0 prediction block and the L1 prediction block of the second partition derived based on the DMVR. In other words, the L0 and L1 prediction blocks of the first partition may be derived based on DMVR. The sample value of the second prediction block of the second partition may be derived based on at least one of the weighted sum of the sample value of the derived L0 prediction block and the sample value of the L1 prediction block or an offset for the BDOF of the second partition. An offset for the BDOF of the second partition is the same as described in Embodiment 10.

On the other hand, when the second partition performs unidirectional prediction, the above-described BDOF may not be applied when deriving the second prediction block of the second partition. In this case, the second prediction block of the second partition may be derived as any one of a L0 or L1 prediction block.

Embodiment 13

When the first partition performs bidirectional prediction, a L0 prediction block and a L1 prediction block may be derived for the first partition. In this case, the L0 prediction block and the L1 prediction block of the first partition may be derived based on DMVR (decoder side motion vector refinement). Here, a method for deriving L0/L1 prediction blocks based on DMVR is the same as described in Embodiment 4, and an overlapping description will be omitted here.

The first prediction block of the first partition may be derived by applying BDOF (Bi-directional optical flow) to a L0 prediction block and a L1 prediction block derived in the above-described way. In other words, the sample value of the first prediction block may be derived based on at least one of a value derived through the weighted average of the sample value of the L0 prediction block and the sample value of the L1 prediction block of the first partition or an offset for the BDOF of the first partition. A weight for the weighted average may be derived based on the BCW index of the first partition, which is the same as described in Embodiment 2. In addition, an offset for the BDOF of the first partition is the same as described in Embodiment 10.

On the other hand, when the first partition performs unidirectional prediction, the above-described DMVR and BDOF may not be applied when deriving the first prediction block of the first partition. In this case, the first prediction block of the first partition may be derived as any one of a L0 or L1 prediction block.

When the second partition performs bidirectional prediction, a L0 prediction block and a L1 prediction block may be derived for the second partition. In this case, the L0 prediction block and the L1 prediction block of the second partition may be derived based on DMVR (decoder side motion vector refinement). Here, a method for deriving L0/L1 prediction blocks based on DMVR is the same as described in Embodiment 4, and an overlapping description will be omitted here.

The second prediction block of the second partition may be derived by applying BDOF to a L0 prediction block and a L1 prediction block derived in the above-described way. In other words, the sample value of the second prediction block may be derived based on at least one of a value derived through the weighted average of the sample value of the L0 prediction block and the sample value of the L1 prediction block of the second partition or an offset for the BDOF of the second partition. A weight for the weighted average may be derived based on the BCW index of the second partition, which is the same as described in Embodiment 2. In addition, an offset for the BDOF of the second partition is the same as described in Embodiment 10.

On the other hand, when the second partition performs unidirectional prediction, the above-described DMVR and BDOF may not be applied when deriving the second prediction block of the second partition. In this case, the second prediction block of the second partition may be derived as any one of a L0 or L1 prediction block.

Embodiment 14

When the first partition performs bidirectional prediction, a L0 prediction block and a L1 prediction block may be derived for the first partition. Illumination compensation may be applied to the L0 prediction block and the L1 prediction block of the first partition, respectively. A method for generating the illumination-compensated L0/L1 prediction blocks is the same as described in Embodiment 5, and an overlapping description will be omitted here.

The first prediction block of the first partition may be derived by applying BDOF (Bi-directional optical flow) to the illumination-compensated L0 prediction block and L1 prediction block of the first partition. In other words, the sample value of the first prediction block of the first partition may be derived based on at least one of the weighted sum of the sample value of an illumination-compensated L0 prediction block and the sample value of an illumination-compensated L1 prediction block or an offset for the BDOF of the first partition. An offset for the BDOF of the first partition is the same as described in Embodiment 10.

On the other hand, when the first partition performs unidirectional prediction, the above-described BDOF may not be applied when deriving the first prediction block of the first partition. In this case, the first prediction block of the first partition may be derived as any one of a L0 or L1 prediction block. Alternatively, illumination compensation may be applied to the L0 or L1 prediction block of the first partition, and the illumination-compensated L0 or L1 prediction block may be set as the first prediction block of the first partition.

When the second partition performs bidirectional prediction, a L0 prediction block and a L1 prediction block may be derived for the second partition. Illumination compensation may be applied to the L0 prediction block and the L1 prediction block of the second partition, respectively. A method for generating the illumination-compensated LO/L1 prediction blocks is the same as described in Embodiment 5, and an overlapping description will be omitted here.

The second prediction block of the second partition may be derived by applying BDOF to the illumination-compensated L0 prediction block and L1 prediction block of the second partition. In other words, the sample value of the second prediction block of the second partition may be derived based on at least one of the weighted sum of the sample value of an illumination-compensated L0 prediction block and the sample value of an illumination-compensated L1 prediction block or an offset for the BDOF of the second partition. An offset for the BDOF of the second partition is the same as described in Embodiment 10.

On the other hand, when the second partition performs unidirectional prediction, the above-described BDOF may not be applied when deriving the second prediction block of the second partition. In this case, the second prediction block of the second partition may be derived as any one of a L0 or L1 prediction block. Alternatively, illumination compensation may be applied to the L0 or L1 prediction block of the second partition, and the illumination-compensated L0 or L1 prediction block may be set as the second prediction block of the second partition.

Embodiment 15

When the first partition performs bidirectional prediction, a L0 prediction block and a L1 prediction block may be derived for the first partition. Illumination compensation may be applied to the L0 prediction block and the L1 prediction block of the first partition, respectively. A method for generating the illumination-compensated L0/L1 prediction blocks is the same as described in Embodiment 5, and an overlapping description will be omitted here.

The first prediction block of the first partition may be derived by applying BCW (bi-prediction with CU-level weight) and BDOF (Bi-directional optical flow) to the illumination-compensated L0 prediction block and L1 prediction block of the first partition.

In other words, the sample value of the first prediction block may be derived based on at least one of a value derived through the weighted average of the sample value of the illumination-compensated L0 prediction block and the sample value of the illumination-compensated L1 prediction block of the first partition or an offset for the BDOF of the first partition. A weight for the weighted average may be derived based on the BCW index of the second partition, which is the same as described in Embodiment 1. In addition, an offset for the BDOF of the first partition is the same as described in Embodiment 10.

On the other hand, when the first partition performs unidirectional prediction, the above-described BCW and BDOF may not be applied when deriving the first prediction block of the first partition. In this case, the first prediction block of the first partition may be derived as any one of a L0 or L1 prediction block. Alternatively, illumination compensation may be applied to the L0 or L1 prediction block of the first partition, and the illumination-compensated L0 or L1 prediction block may be set as the first prediction block of the first partition.

When the second partition performs bidirectional prediction, a L0 prediction block and a L1 prediction block may be derived for the second partition. Illumination compensation may be applied to the L0 prediction block and the L1 prediction block of the second partition, respectively. A method for generating the illumination-compensated LO/L1 prediction blocks is the same as described in Embodiment 5, and an overlapping description will be omitted here.

The second prediction block of the second partition may be derived by applying BCW and BDOF to the illumination-compensated L0 prediction block and L1 prediction block of the second partition.

In other words, the sample value of the second prediction block may be derived based on at least one of a value derived through the weighted average of the sample value of the illumination-compensated L0 prediction block and the sample value of the illumination-compensated L1 prediction block of the second partition or an offset for the BDOF of the second partition. A weight for the weighted average may be derived based on the BCW index of the second partition, which is the same as described in Embodiment 2. In addition, an offset for the BDOF of the second partition is the same as described in Embodiment 10.

On the other hand, when the second partition performs unidirectional prediction, the above-described BCW and BDOF may not be applied when deriving the second prediction block of the second partition. In this case, the second prediction block of the second partition may be derived as any one of a L0 or L1 prediction block. Alternatively, illumination compensation may be applied to the L0 or L1 prediction block of the second partition, and the illumination-compensated L0 or L1 prediction block may be set as the second prediction block of the second partition.

Embodiment 16

When the first partition performs bidirectional prediction, a L0 prediction block and a L1 prediction block may be derived for the first partition. In this case, the L0 prediction block and the L1 prediction block of the first partition may be derived based on DMVR (decoder side motion vector refinement). Here, a method for deriving LO/L1 prediction blocks based on DMVR is the same as described in Embodiment 8, and an overlapping description will be omitted here.

Illumination compensation may be applied to L0 and L1 prediction blocks derived in the above-described manner to generate illumination-compensated L0 and L1 prediction blocks, which is the same as described in Embodiment 8.

The first prediction block of the first partition may be derived by applying BDOF (Bi-directional optical flow) to the illumination-compensated L0 prediction block and L1 prediction block of the first partition.

In other words, the sample value of the first prediction block may be derived based on at least one of the weighted sum of the sample value of the illumination-compensated L0 prediction block and the sample value of the illumination-compensated L1 prediction block of the first partition or an offset for the BDOF of the first partition. An offset for the BDOF of the first partition is the same as described in Embodiment 10.

On the other hand, when the first partition performs unidirectional prediction, the above-described DMVR and BDOF may not be applied when deriving the first prediction block of the first partition. In this case, the first prediction block of the first partition may be derived as any one of a L0 or L1 prediction block. Alternatively, illumination compensation may be applied to the L0 or L1 prediction block of the first partition, and the illumination-compensated L0 or L1 prediction block may be set as the first prediction block of the first partition.

When the second partition performs bidirectional prediction, a L0 prediction block and a L1 prediction block may be derived for the second partition. In this case, the L0 prediction block and the L1 prediction block of the first partition may be derived based on DMVR (decoder side motion vector refinement). Here, a method for deriving L0/L1 prediction blocks based on DMVR is the same as described in Embodiment 8, and an overlapping description will be omitted here.

Illumination compensation may be applied to L0 and L1 prediction blocks derived in the above-described manner to generate illumination-compensated L0 and L1 prediction blocks, which is the same as described in Embodiment 8.

The second prediction block of the second partition may be derived by applying BDOF to the illumination-compensated L0 prediction block and L1 prediction block of the second partition.

In other words, the sample value of the second prediction block may be derived based on at least one of the weighted sum of the sample value of the illumination-compensated L0 prediction block and the sample value of the illumination-compensated L1 prediction block of the second partition or an offset for the BDOF of the second partition. An offset for the BDOF of the second partition is the same as described in Embodiment 10.

On the other hand, when the second partition performs unidirectional prediction, the above-described DMVR and BDOF may not be applied when deriving the second prediction block of the second partition. In this case, the second prediction block of the second partition may be derived as any one of a L0 or L1 prediction block. Alternatively, illumination compensation may be applied to the L0 or L1 prediction block of the second partition, and the illumination-compensated L0 or L1 prediction block may be set as the second prediction block of the second partition.

Embodiment 17

When the first partition performs bidirectional prediction, a L0 prediction block and a L1 prediction block may be derived for the first partition. In this case, the L0 prediction block and the L1 prediction block of the first partition may be derived based on DMVR (decoder side motion vector refinement). Here, a method for deriving LO/L1 prediction blocks based on DMVR is the same as described in Embodiment 9, and an overlapping description will be omitted here.

Illumination compensation may be applied to L0 and L1 prediction blocks derived in the above-described manner to generate illumination-compensated L0 and L1 prediction blocks, which is the same as described in Embodiment 9.

The first prediction block of the first partition may be derived by applying BDOF (Bi-directional optical flow) to the illumination-compensated L0 prediction block and L1 prediction block of the first partition.

In other words, the sample value of the first prediction block may be derived based on at least one of a value derived through the weighted average of the sample value of the illumination-compensated L0 prediction block and the sample value of the illumination-compensated L1 prediction block of the first partition or an offset for the BDOF of the first partition. A weight for the weighted average may be derived based on the BCW index of the second partition, which is the same as described in Embodiment 1. In addition, an offset for the BDOF of the first partition is the same as described in Embodiment 10.

On the other hand, when the first partition performs unidirectional prediction, the above-described DMVR and BDOF may not be applied when deriving the first prediction block of the first partition. In this case, the first prediction block of the first partition may be derived as any one of a L0 or L1 prediction block. Alternatively, illumination compensation may be applied to the L0 or L1 prediction block of the first partition, and the illumination-compensated L0 or L1 prediction block may be set as the first prediction block of the first partition.

When the second partition performs bidirectional prediction, a L0 prediction block and a L1 prediction block may be derived for the second partition. In this case, the L0 prediction block and the L1 prediction block of the second partition may be derived based on DMVR. Here, a method for deriving L0/L1 prediction blocks based on DMVR is the same as described in Embodiment 9, and an overlapping description will be omitted here.

Illumination compensation may be applied to L0 and L1 prediction blocks derived in the above-described manner to generate illumination-compensated L0 and L1 prediction blocks, which is the same as described in Embodiment 9.

The second prediction block of the second partition may be derived by applying BDOF to the illumination-compensated L0 prediction block and L1 prediction block of the second partition.

In other words, the sample value of the second prediction block may be derived based on at least one of a value derived through the weighted average of the sample value of the illumination-compensated L0 prediction block and the sample value of the illumination-compensated L1 prediction block of the second partition or an offset for the BDOF of the second partition. A weight for the weighted average may be derived based on the BCW index of the second partition, which is the same as described in Embodiment 2. In addition, an offset for the BDOF of the second partition is the same as described in Embodiment 10.

On the other hand, when the second partition performs unidirectional prediction, the above-described DMVR and BDOF may not be applied when deriving the second prediction block of the second partition. In this case, the second prediction block of the second partition may be derived as any one of a L0 or L1 prediction block. Alternatively, illumination compensation may be applied to the L0 or L1 prediction block of the second partition, and the illumination-compensated L0 or L1 prediction block may be set as the second prediction block of the second partition.

The same or different prediction mode may be applied to a plurality of partitions belonging to a current block. As the prediction mode of each partition, any one of a merge mode, an AMVP mode, an intra block copy (IBC) mode, a template matching-based prediction (TMP) mode or an intra prediction mode may be used. Even when a plurality of partitions use a different prediction mode, unidirectional or bidirectional prediction corresponding to a corresponding prediction mode may be performed for each partition. Hereinafter, a method for deriving LO/L1 prediction blocks for each prediction mode of each partition will be described.

Derivation Method 1

The first partition and the second partition of a current block may be a block encoded in a merge mode. In this case, in the above-described Embodiments 1 to 17, L0 and/or L1 prediction blocks for the first partition and the second partition may be derived based on a merge mode.

Specifically, the merge candidate list of a current block may be configured. The merge candidate list may include one or more merge candidates. A merge candidate for the first partition may be selected from the merge candidate list. The motion vector of the first partition may be derived based on the motion vector of the selected merge candidate. When the selected merge candidate performs unidirectional prediction, the motion vector of the first partition may be any one of a L0 motion vector or a L1 motion vector. When the selected merge candidate performs bidirectional prediction, the motion vector of the first partition may include a L0 motion vector and a L1 motion vector. Based on the L0 and L1 motion vectors of the first partition, the L0 and L1 prediction blocks of the first partition may be derived, respectively.

In addition, a merge candidate for the second partition may be selected from the merge candidate list of the current block. The motion vector of the second partition may be derived based on the motion vector of the selected merge candidate. When the selected merge candidate performs unidirectional prediction, the motion vector of the second partition may be any one of a L0 motion vector or a L1 motion vector. When the selected merge candidate performs bidirectional prediction, the motion vector of the second partition may include a L0 motion vector and a L1 motion vector. Based on the L0 and L1 motion vectors of the second partition, the L0 and L1 prediction blocks of the second partition may be derived, respectively.

Derivation Method 2

The first partition of a current block may be a block encoded in a merge mode and the second partition of a current block may be a block encoded in an IBC mode. In this case, in the above-described Embodiments 1 to 17, L0 and/or L1 prediction blocks for the first partition may be derived based on a merge mode. In the above-described Embodiments 1 to 17, L0 and/or L1 prediction blocks for the second partition may be derived based on an IBC mode.

Specifically, a merge candidate list for the first partition of a current block may be configured and L0 and/or L1 prediction blocks for the first partition may be derived based on a merge candidate list. It is the same as described in Embodiment 1, and an overlapping description will be omitted here.

An IBC candidate list for the second partition of a current block may be configured. The IBC candidate list may include one or more IBC candidates. An IBC candidate for the second partition may be selected from the IBC candidate list. The motion vector of the second partition may be derived based on the motion vector of the selected IBC candidate. When the selected IBC candidate performs unidirectional prediction, the motion vector of the second partition may be any one of a L0 motion vector or a L1 motion vector. When the selected IBC candidate performs bidirectional prediction, the motion vector of the second partition may include a L0 motion vector and a L1 motion vector. The L0 and L1 prediction blocks of the second partition may be derived respectively by performing intra block copy based on the L0 and L1 motion vectors of the second partition.

Derivation Method 3

The first partition and the second partition of a current block may be a block encoded in an IBC mode. In this case, in the above-described Embodiments 1 to 17, L0 and/or L1 prediction blocks for the first partition and the second partition may be derived based on an IBC mode.

Specifically, the IBC candidate list of a current block may be configured. The IBC candidate list may include one or more IBC candidates. An IBC candidate for the first partition may be selected from the IBC candidate list. The motion vector of the first partition may be derived based on the motion vector of the selected IBC candidate. When the selected IBC candidate performs unidirectional prediction, the motion vector of the first partition may be any one of a L0 motion vector or a L1 motion vector. When the selected IBC candidate performs bidirectional prediction, the motion vector of the first partition may include a L0 motion vector and a L1 motion vector. The L0 and L1 prediction blocks of the first partition may be derived respectively by performing intra block copy based on the L0 and L1 motion vectors of the first partition.

In addition, an IBC candidate for the second partition may be selected from the IBC candidate list of a current block and the L0 and/or L1 prediction block of the second partition may be derived based on the selected IBC candidate. It is the same as described in Embodiment 2, and an overlapping description will be omitted here.

Derivation Method 4

The first partition of a current block may be a block encoded in a merge mode and the second partition of a current block may be a block encoded in a TMP mode. In this case, in the above-described Embodiments 1 to 17, L0 and/or L1 prediction blocks for the first partition may be derived based on a merge mode. In the above-described Embodiments 1 to 17, L0 and/or L1 prediction blocks for the second partition may be derived based on a TMP mode.

Specifically, a merge candidate list for the first partition of a current block may be configured and L0 and/or L1 prediction blocks for the first partition may be derived based on a merge candidate list. It is the same as described in Embodiment 1, and an overlapping description will be omitted here.

In addition, a TMP candidate list for the second partition of a current block may be configured. The TMP candidate list may include one or more TMP candidates. A TMP candidate for the second partition may be selected from the TMP candidate list. As an example, for each of one or more TMP candidates belonging to the TMP candidate list, a difference between the template area of a current block and the template area of a reference block may be calculated. Here, a reference block may be specified based on a corresponding TMP candidate. Among one or more TMP candidates belonging to the TMP candidate list, a TMP candidate with the smallest difference value may be selected as a TMP candidate for the second partition.

The motion vector of the second partition may be derived based on the selected TMP candidate. A predetermined search range for template matching may be determined based on the motion vector of the second partition, and template matching may be performed within the search range to derive the L0 and/or L1 prediction block of the second partition. As an example, a search range within a L0 reference picture may be determined based on the L0 motion vector of the second partition, and a difference between the template area of a current block and the template area of a reference block at a corresponding search position may be calculated for each search position within a corresponding search range. Among the search positions within the search range, a search position with the smallest difference value may be determined. A reference block at the determined search position may be derived as the L0 prediction block of the second partition. Similarly, a search range within a L1 reference picture may be determined based on the L1 motion vector of the second partition, and a difference between the template area of a current block and the template area of a reference block at a corresponding search position may be calculated for each search position within a corresponding search range. Among the search positions within the search range, a search position with the smallest difference value may be determined. A reference block at the determined search position may be derived as the L1 prediction block of the second partition.

Derivation Method 5

The first partition of a current block may be a block encoded in an IBC mode and the second partition of a current block may be a block encoded in a TMP mode. In this case, in the above-described Embodiments 1 to 17, L0 and/or L1 prediction blocks for the first partition may be derived based on an IBC mode. In the above-described Embodiments 1 to 17, L0 and/or L1 prediction blocks for the second partition may be derived based on a TMP mode.

Specifically, an IBC candidate list for the first partition of a current block may be configured and L0 and/or L1 prediction blocks for the first partition may be derived based on an IBC candidate list. It is the same as described in Embodiment 3, and an overlapping description will be omitted here.

In addition, a TMP candidate list for the second partition of a current block may be configured and L0 and/or L1 prediction blocks for the second partition may be derived based on a TMP candidate list. It is the same as described in Embodiment 4, and an overlapping description will be omitted here.

Derivation Method 6

The first partition and the second partition of a current block may be a block encoded in a TMP mode. In this case, in the above-described Embodiments 1 to 17, L0 and/or L1 prediction blocks for the first partition may be derived based on a TMP mode. In the above-described Embodiments 1 to 17, L0 and/or L1 prediction blocks for the second partition may be derived based on an TMP mode.

Specifically, the TMP candidate list of a current block may be configured. The TMP candidate list may include one or more TMP candidates. An TMP candidate for the first partition may be selected from the TMP candidate list. As an example, for each of one or more TMP candidates belonging to the TMP candidate list, a difference between the template area of a current block and the template area of a reference block may be calculated. Here, a reference block may be specified based on a corresponding TMP candidate. Among one or more TMP candidates belonging to the TMP candidate list, a TMP candidate with the smallest difference value may be selected as a TMP candidate for the first partition.

The motion vector of the first partition may be derived based on the selected TMP candidate. A predetermined search range for template matching may be determined based on the motion vector of the first partition, and template matching may be performed within the search range to derive the L0 and/or L1 prediction block of the first partition. As an example, a search range within a L0 reference picture may be determined based on the L0 motion vector of the first partition, and a difference between the template area of a current block and the template area of a reference block at a corresponding search position may be calculated for each search position within a corresponding search range. Among the search positions within the search range, a search position with the smallest difference value may be determined. A reference block at the determined search position may be derived as the L0 prediction block of the first partition. Similarly, a search range within a L1 reference picture may be determined based on the L1 motion vector of the first partition, and a difference between the template area of a current block and the template area of a reference block at a corresponding search position may be calculated for each search position within a corresponding search range. Among the search positions within the search range, a search position with the smallest difference value may be determined. A reference block at the determined search position may be derived as the L1 prediction block of the first partition.

In addition, L0 and/or L1 prediction blocks for the second partition may be derived based on the TMP candidate list of a current block. It is the same as described in Embodiment 4, and an overlapping description will be omitted here.

A BCW index in the above-described embodiment may be signaled through a bitstream or may be derived from an encoding apparatus/a decoding apparatus.

As an example, when a current block is encoded in a merge mode, the BCW index may be derived from the merge candidate list of a current block. The BCW index may be derived for the first partition and the second partition of a current block, respectively.

Specifically, a merge candidate for the first partition of a current block may be determined from a merge candidate list, and the value of the BCW index of the first partition may be derived based on the value of the BCW index of a corresponding merge candidate. The value of the BCW index of the first partition may be set as the same value as the BCW index of a merge candidate for the first partition. Similarly, a merge candidate for the second partition of a current block may be determined from a merge candidate list, and the value of the BCW index of the second partition may be derived based on the value of the BCW index of a corresponding merge candidate. The value of the BCW index of the second partition may be set as the same value as the BCW index of a merge candidate for the second partition.

An illumination compensation flag in the above-described embodiment may be signaled through a bitstream or may be derived from an encoding apparatus/a decoding apparatus.

As an example, when a current block is encoded in a merge mode, the illumination compensation flag may be derived from the merge candidate list of a current block. The illumination compensation flag may be derived for the first partition and the second partition of a current block, respectively.

Specifically, a merge candidate for the first partition of a current block may be determined from a merge candidate list, and the value of the illumination compensation flag of the first partition may be derived based on the value of the illumination compensation flag of a corresponding merge candidate. The value of the illumination compensation flag of the first partition may be set as the same value as the illumination compensation flag of a merge candidate for the first partition. Similarly, a merge candidate for the second partition of a current block may be determined from a merge candidate list, and the value of the illumination compensation flag of the second partition may be derived based on the value of the illumination compensation flag of a corresponding merge candidate. The value of the illumination compensation flag of the second partition may be set as the same value as the illumination compensation flag of a merge candidate for the second partition.

A BCW index applied for each partition of a current block may be stored in response to the partitioning shape of a current block.

When a geometric partitioning mode is applied to a current block, motion information for the first partition and motion information for the second partition may exist simultaneously within a current block which is one coding unit. Accordingly, motion information for the first partition and motion information for the second partition may be stored in response to the partitioning shape of a current block. In this case, a BCW index may be stored together in a process of storing motion information in response to the partitioning shape of a current block.

Specifically, a current block may be divided into the first area, the second area and a blending area. Here, the first area is an area belonging to the first partition, which may be defined as an area through which a partitioning boundary within a current block does not pass. The second area is an area belonging to the second partition, which may be defined as an area through which a partitioning boundary within a current block does not pass. The blending area may be defined as an area through which a partitioning boundary within a current block passes.

The motion information of the first partition may be stored in the first area. The motion information of the second partition may be stored in the second area. New motion information that the motion information of the first partition and the motion information of the second partition are combined according to a pre-defined condition may be stored in a blending area. As an example, a bidirectional motion vector may be generated based on a combination of any one of the L0 or L1 motion vector of the first partition and any one of the L0 or L1 motion vector of the second partition, and the generated bidirectional motion vector may be stored in a blending area. Alternatively, any one of the motion information of the first partition or the motion information of the second partition may be selected according to a pre-defined condition, and the selected motion information may be stored in a blending area.

Meanwhile, the BCW index of the first partition may be stored in the first area. The BCW index of the second partition may be stored in the second area. A BCW index according to a pre-defined condition may be stored in a blending area. As an example, when the first partition and the second partition have a different BCW index, the BCW index of any one of the two may be selectively stored in a blending area. In this case, among the BCW index of the first partition and the BCW index of the second partition, an index which is not BCW_DEFAULT may be preferentially stored. Here, BCW_DEFAULT may be a BCW index representing that weights applied to a L0 prediction block and a L1 prediction block are the same. On the other hand, when BCW indexes for the first partition and the second partition are the same, a corresponding BCW index may be stored in a blending area.

In addition, an illumination compensation flag may be additionally stored in a process of storing motion information in response to the partitioning shape of a current block.

Specifically, the illumination compensation flag (LIC flag) of the first partition may be stored in the first area. The illumination compensation flag of the second partition may be stored in the second area. An illumination compensation flag according to a pre-defined condition may be stored in a blending area. As an example, when the first partition and the second partition have a different illumination compensation flag, the illumination compensation flag of any one of the two may be selectively stored in a blending area. In this case, an illumination compensation flag having the minimum value between the value of the illumination compensation flag of the first partition and the value of the illumination compensation flag of the second partition may be stored in a blending area. In other words, when illumination compensation flags for the first partition and the second partition are different, an illumination compensation flag representing that illumination compensation is not performed may be preferentially stored in a blending area. Alternatively, an illumination compensation flag having the maximum value between the illumination compensation flag of the first partition and the illumination compensation flag of the second partition may be stored in a blending area. In other words, when illumination compensation flags for the first partition and the second partition are different, an illumination compensation flag representing that illumination compensation is performed may be preferentially stored in a blending area. On the other hand, when illumination compensation flags for the first partition and the second partition are the same, a corresponding illumination compensation flag may be stored in a blending area.

Referring to FIG. 4, the prediction block of a current block may be derived based on the first prediction block of the first partition and the second prediction block of the second partition S420.

A blending process may be performed in which the first prediction block of the first partition and the second prediction block of the second partition are weighted averaged in the form of geometric partitioning. The final prediction block of a current block may be derived through this blending process between the first and second prediction blocks.

In performing bidirectional prediction for each partition of a current block, bit precision may be increased or decreased by considering an internal bit depth and an output bit depth.

As described above, the first prediction block (P0) of the first partition and the second prediction block (P1) of the second partition may be derived, respectively. In this case, the first prediction block (P0) of the first partition and the second prediction block (P1) of the second partition may be derived through bidirectional prediction.

When an internal bit depth and an output bit depth are different, the bit precision of P0 and P1 may be scaled down in response to an output bit depth.

As an example, when an output bit depth is 10-bit and an internal bit depth is greater than or equal to 10-bit, the same bit precision as an internal bit depth may be maintained in the process of deriving the L0 prediction block ($P_{00}$) and the L1 prediction block ($P_{01}$) of the first partition, and scale-down may be performed to derive the first prediction block having the same bit precision as an output bit depth in the process of deriving the first prediction block of the first partition based on the L0 prediction block ($P_{00}$) and the L1 prediction block ($P_{01}$) of the first partition. Similarly, the same bit precision as an internal bit depth may be maintained in the process of deriving the L0 prediction block ($P_{10}$) and the L1 prediction block ($P_{11}$) of the second partition, and scale-down may be performed to derive the second prediction block having the same bit precision as an output bit depth in the process of deriving the second prediction block of the second partition based on the L0 prediction block ($P_{10}$) and the L1 prediction block ($P_{11}$) of the second partition.

Alternatively, when an output bit depth is 10-bit and an internal bit depth is greater than or equal to 10-bit, the same bit precision as an internal bit depth may be maintained in the process of deriving the first prediction block (P0) of the first partition and the second prediction block (P1) of the second partition, and scale-down may be performed to derive a prediction block having the same bit precision as an output bit depth in the process of deriving the prediction block of a current block based on the first prediction block of the first partition and the second prediction block of the second partition. In other words, the performance of final prediction block generation may be improved by highly maintaining bit precision for the first prediction block of the first partition and the second prediction block of the second partition before deriving the final prediction block of a current block.

The internal bit depth may be 14-bit, 16-bit, 20-bit or higher, and the output bit depth may be 10-bit, 12-bit, 16-bit or higher.

FIG. 5 shows a schematic configuration of an inter predictor 332 that performs an inter prediction method according to the present disclosure.

Referring to FIG. 5, an inter predictor 332 may include a block partitioner 500 and a prediction block deriver 510.

A block partitioner 500 may partition a current block into a plurality of partitions. In this case, a current block may be partitioned into two or more partitions based on one or more partitioning lines. As an example, a current block may be partitioned into two or more partitions based on geometric partitioning.

A prediction block deriver 510 may include at least one of the first prediction block deriver (not shown) that derives a prediction block for each partition of a current block or the second prediction block deriver (not shown) that derives the final prediction block of a current block based on a prediction block for each partition output from the first prediction block deriver.

The first prediction block deriver may derive the first prediction block (P0) for the first partition of a current block. In this case, the first prediction block of the first partition may be derived through unidirectional or bidirectional prediction. In addition, the first prediction block deriver may derive the second prediction block (P1) for the second partition of a current block. In this case, the second prediction block of the second partition may be derived through unidirectional or bidirectional prediction.

The first prediction block deriver may derive the first and second prediction blocks of a current block based on at least one of the Embodiments 1 to 17 described by referring to FIG. 4.

The same or different prediction mode may be applied to a plurality of partitions belonging to a current block. A method for deriving L0/L1 prediction blocks for each prediction mode of each partition is the same as described in the above-described derivation methods 1 to 6.

A BCW index and/or an illumination compensation flag according to the present disclosure may be signaled through a bitstream or may be derived from an encoding apparatus/a decoding apparatus. It is the same as described by referring to FIG. 4, and an overlapping description will be omitted here.

At least one of motion information, a BCW index or an illumination compensation flag applied for each partition of a current block may be stored in response to the partitioning shape of a current block, which is the same as described by referring to FIG. 4.

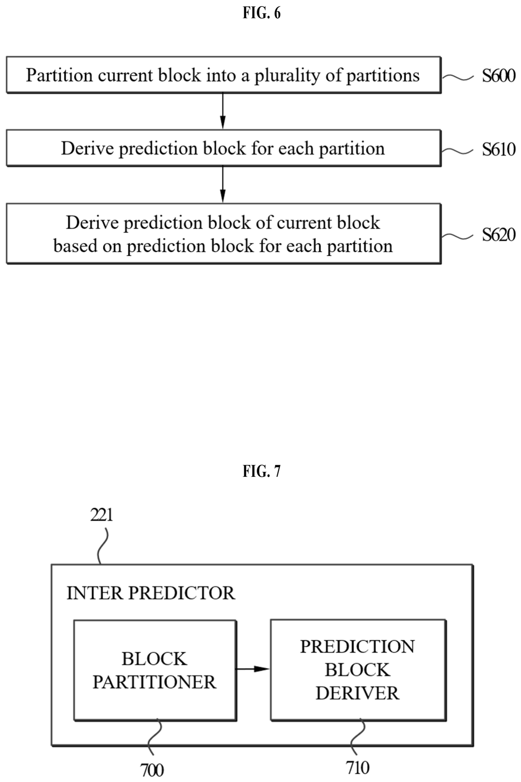

FIG. 6 shows an inter prediction method performed by an encoding apparatus 200 as an embodiment according to the present disclosure.

Referring to FIG. 6, a current block may be partitioned into a plurality of partitions S600. In this case, a current block may be partitioned into two or more partitions based on one or more partitioning lines. As an example, a current block may be partitioned into two or more partitions based on geometric partitioning.

Referring to FIG. 6, a prediction block may be derived for each partition of a current block S610.

The first prediction block (P0) may be derived for the first partition of a current block. In this case, the first prediction block of the first partition may be derived through unidirectional or bidirectional prediction. In addition, the first prediction block deriver may derive the second prediction block (P1) for the second partition of a current block. In this case, the second prediction block of the second partition may be derived through unidirectional or bidirectional prediction.

The first and second prediction blocks of a current block may be derived based on at least one of the Embodiments 1 to 17 described by referring to FIG. 4, and an overlapping description will be omitted here.

The same or different prediction mode may be applied to a plurality of partitions belonging to a current block. A method for deriving L0/L1 prediction blocks for each prediction mode of each partition is the same as described in the above-described derivation methods 1 to 6.

A BCW index and/or an illumination compensation flag according to the present disclosure may be signaled through a bitstream or may be derived from an encoding apparatus/a decoding apparatus. It is the same as described by referring to FIG. 4, and an overlapping description will be omitted here.

At least one of motion information, a BCW index or an illumination compensation flag applied for each partition of a current block may be stored in response to the partitioning shape of a current block, which is the same as described by referring to FIG. 4.

Referring to FIG. 6, the prediction block of a current block may be derived based on the first prediction block of the first partition and the second prediction block of the second partition S620.

A blending process may be performed in which the first prediction block of the first partition and the second prediction block of the second partition are weighted averaged in the form of geometric partitioning. The final prediction block of a current block may be derived through this blending process between the first and second prediction blocks.

In performing bidirectional prediction for each partition of a current block, bit precision may be increased or decreased by considering an internal bit depth and an output bit depth, which is the same as described by referring to FIG. 4.

FIG. 7 shows a schematic configuration of an inter predictor 221 that performs an inter prediction method according to the present disclosure.

Referring to FIG. 7, an inter predictor 221 may include a block partitioner 700 and a prediction block deriver 710.

A block partitioner 700 may partition a current block into a plurality of partitions. In this case, a current block may be partitioned into two or more partitions based on one or more partitioning lines. As an example, a current block may be partitioned into two or more partitions based on geometric partitioning.

A prediction block deriver 710 may include at least one of the first prediction block deriver (not shown) that derives a prediction block for each partition of a current block or the second prediction block deriver (not shown) that derives the final prediction block of a current block based on a prediction block for each partition output from the first prediction block deriver.

The first prediction block deriver may derive the first prediction block (P0) for the first partition of a current block. In this case, the first prediction block of the first partition may be derived through unidirectional or bidirectional prediction. In addition, the first prediction block deriver may derive the second prediction block (P1) for the second partition of a current block. In this case, the second prediction block of the second partition may be derived through unidirectional or bidirectional prediction.

The first prediction block deriver may derive the first and second prediction blocks of a current block based on at least one of the Embodiments 1 to 17 described by referring to FIG. 4.

The same or different prediction mode may be applied to a plurality of partitions belonging to a current block. A method for deriving L0/L1 prediction blocks for each prediction mode of each partition is the same as described in the above-described derivation methods 1 to 6.

A BCW index and/or an illumination compensation flag according to the present disclosure may be signaled through a bitstream or may be derived from an encoding apparatus/a decoding apparatus. It is the same as described by referring to FIG. 4, and an overlapping description will be omitted here.

At least one of motion information, a BCW index or an illumination compensation flag applied for each partition of a current block may be stored in response to the partitioning shape of a current block, which is the same as described by referring to FIG. 4.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

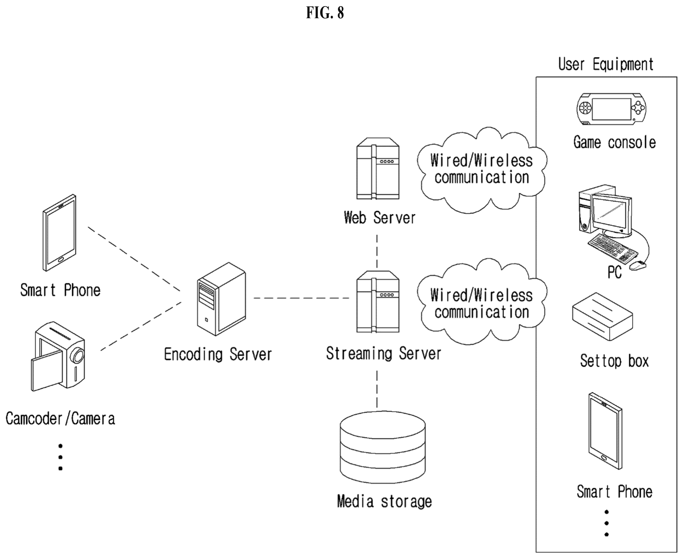

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1. An image decoding method, comprising:

partitioning a current block into a plurality of partitions, wherein the plurality of partitions includes a first partition and a second partition;
deriving a first prediction block of the first partition;
deriving a second prediction block of the second partition; and
deriving a prediction block of the current block based on the first prediction block and the second prediction block, wherein at least one of the first prediction block or the second prediction block is derived through bidirectional prediction.

2. The method of claim 1, wherein when the first partition performs the bidirectional prediction, a L0 prediction block and a L1 prediction block are derived for the first partition, and
wherein the first prediction block is derived based on a weighted sum of the L0 prediction block and the L1 prediction block.

3. The method of claim 2, wherein a weight for the weighted sum is determined based on any one of a plurality of weight candidates belonging to a pre-defined weight set.

4. The method of claim 1, wherein deriving the first prediction block comprises:

determining a predetermined search range based on a motion vector of the first partition;
calculating a cost for each search position within the search range; and
deriving a L0 prediction block and a L1 prediction block of the first partition based on a search position having a minimum cost among the calculated costs.

5. The method of claim 4, wherein the cost is calculated as a sum of absolute difference (SAD) between a weighted L0 block at the search position and a weighted L1 block corresponding to the weighted L0 block.

6. The method of claim 1, wherein deriving the first prediction block comprises:

applying a first illumination compensation parameter to a L0 prediction block of the first partition to generate an illumination-compensated L0 prediction block, wherein the first illumination compensation parameter is derived based on a neighboring area of the current block and a neighboring area of the L0 prediction block;
applying a second illumination compensation parameter to a L1 prediction block of the first partition to generate an illumination-compensated L1 prediction block, wherein the second illumination compensation parameter is derived based on the neighboring area of the current block and a neighboring area of the L1 prediction block; and
deriving the first prediction block based on a weighted sum of the illumination-compensated L0 prediction block and the illumination-compensated L1 prediction block.

7. The method of claim 6, wherein a weight for the weighted sum is determined based on any one of a plurality of weight candidates belonging to a pre-defined weight set.

8. The method of claim 1, wherein a value of a sample of the first prediction block is derived based on at least one of a value of a sample belonging to a L0 prediction block of the first partition, a value of a sample belonging to a L1 prediction block of the first partition, or a predetermined offset, and
wherein the offset is derived based on at least one of horizontal and vertical gradients at a position of the sample belonging to the L0 prediction block or horizontal and vertical gradients at a position of the sample belonging to the L1 prediction block.

9. The method of claim 1, wherein each of the first partition and the second partition is a block encoded in any one of a merge mode, an intra block copy (IBC) mode, or a template matching-based prediction (TMP) mode.

10. The method of claim 1, wherein a BCW index is obtained for each of the first partition and the second partition, and
wherein the BCW index specifies any one of a plurality of weight candidates belonging to a pre-defined weight set.

11. The method of claim 10, wherein the current block is divided into a first area, a second area and a blending area, and
wherein any one of the BCW index of the first partition or the BCW index of the second partition is selectively stored in the blending area.

12. The method of claim 1, wherein the first prediction block and the second prediction block have bit precision equal to an internal bit depth, and
wherein the prediction block of the current block has bit precision equal to an output bit depth.

13. An image encoding method, comprising:

   partitioning a current block into a plurality of partitions, wherein the plurality of partitions includes a first partition and a second partition;
   deriving a first prediction block of the first partition;
   deriving a second prediction block of the second partition; and
   deriving a prediction block of the current block based on the first prediction block and the second prediction block, wherein at least one of the first prediction block or the second prediction block is derived through bidirectional prediction.

14. A computer-readable storage medium storing a bitstream generated by an image encoding method, the image encoding method comprising:

   partitioning a current block into a plurality of partitions, wherein the plurality of partitions includes a first partition and a second partition;
   deriving a first prediction block of the first partition;
   deriving a second prediction block of the second partition; and
   deriving a prediction block of the current block based on the first prediction block and the second prediction block, wherein at least one of the first prediction block or the second prediction block is derived through bidirectional prediction.

15. A method for transmitting data, comprising:

   obtaining a bitstream for image information, wherein the bitstream is generated based on partitioning a current block into a plurality of partitions including a first partition and a second partition, deriving a first prediction block of the first partition, deriving a second prediction block of the second partition, and deriving a prediction block of the current block based on the first prediction block and the second prediction block; and
   transmitting the data including the bitstream,
   wherein at least one of the first prediction block or the second prediction block is derived through bidirectional prediction.

**FIG.1**

**FIG.2**

200 ENCODING APPARATUS

INPUT IMAGE (PICTURE) → 210 IMAGE PARTITIONER

220 — 221 INTER PREDICTOR, 222 INTRA PREDICTOR

270 — DPB, MEMORY

260 — FILTER

231 (+/−) → 230 → 232 TRANSFORMER → 233 QUANTIZER → 240 ENTROPY ENCODER → BITSTREAM

234 DEQUANTIZER → 235 INVERSE TRANSFORMER → 250 (+)

FIG.3

EP 4 701 191 A1

FIG.4

| Partition current block into a plurality of partitions | ~ S400 |

↓

| Derive prediction block for each partition | ~ S410 |

↓

| Derive prediction block of current block<br>based on prediction block for each partition | ~ S420 |

FIG. 5

332

INTER PREDICTOR

| BLOCK<br>PARTITIONER | → | PREDICTION<br>BLOCK<br>DERIVER |

500

510

**FIG. 6**

| Partition current block into a plurality of partitions | ~ S600 |

↓

| Derive prediction block for each partition | ~ S610 |

↓

| Derive prediction block of current block based on prediction block for each partition | ~ S620 |

**FIG. 7**

221

INTER PREDICTOR

| BLOCK PARTITIONER | → | PREDICTION BLOCK DERIVER |

700           710

**FIG. 8**

## INTERNATIONAL SEARCH REPORT

| International application No. |
| --- |
| **PCT/KR2024/005302** |

| A. | CLASSIFICATION OF SUBJECT MATTER |
| --- | --- |

**H04N 19/577**(2014.01)i; **H04N 19/119**(2014.01)i; **H04N 19/176**(2014.01)i; **H04N 19/157**(2014.01)i; **H04N 19/105**(2014.01)i; **H04N 19/513**(2014.01)i

According to International Patent Classification (IPC) or to both national classification and IPC

| B. | FIELDS SEARCHED |
| --- | --- |

Minimum documentation searched (classification system followed by classification symbols)

H04N 19/577(2014.01); H04N 19/105(2014.01); H04N 19/11(2014.01); H04N 19/119(2014.01); H04N 19/132(2014.01); H04N 19/137(2014.01); H04N 19/573(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 파티션(partition), 양방향(bidirect), 예측(predict), 벡터 (vector), 비용(cost), 가중(weight)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2021-0266537 A1 (BEIJING BYTEDANCE NETWORK TECHNOLOGY CO., LTD. et al.) 26 August 2021 (2021-08-26) See paragraphs [0090], [0168], [0191]-[0194], [0234]-[0235], [0280]-[0291], [0310], [0313], [0328] and [0889]; claims 1, 3, 16, 18 and 20; and figures 16 and 19. | 1-7,13-15 |
| Y | | 8-12 |
| Y | KR 10-2022-0038791 A (HANGZHOU HIKVISION DIGITAL TECHNOLOGY CO., LTD.) 29 March 2022 (2022-03-29) See claim 3. | 8 |
| Y | YU, Ruoyang et al. AHG12: Enhanced geometrical prediction mode. JVET-AD0064-v1, Joint Video Experts Team (JVET) of ITU-T SG 16 WP 3 and ISO/IEC JTC 1/SC 29, 30th Meeting. Antalya, TR. pp. 1-3, 14 April 2023. See pages 1-2. | 9 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 August 2024** | **09 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/005302** |

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2022-0408082 A1 (INTERDIGITAL VC HOLDINGS FRANCE, SAS) 22 December 2022 (2022-12-22)<br>     See paragraphs [0081]-[0082] and [0227]-[0228]. | 10-11 |
| Y | KR 10-2022-0063312 A (BEIJING DAJIA INTERNET INFORMATION TECHNOLOGY CO., LTD.) 17 May 2022 (2022-05-17)<br>     See paragraphs [0041]-[0042] and [0093]; and claim 1. | 12 |

Form PCT/ISA/210 (second sheet) (July 2022)

## INTERNATIONAL SEARCH REPORT
### Information on patent family members

International application No.

**PCT/KR2024/005302**

| Patent document cited in search report | | | Publication date (day/month/year) | Patent family member(s) | | | Publication date (day/month/year) |
|---|---|---|---|---|---|---|---|
| US | 2021-0266537 | A1 | 26 August 2021 | CN | 117979023 | A | 03 May 2024 |
| | | | | EP | 4307678 | A2 | 17 January 2024 |
| | | | | EP | 4307678 | A3 | 22 May 2024 |
| | | | | JP | 2023-011591 | A | 24 January 2023 |
| | | | | JP | 7436597 | B2 | 21 February 2024 |
| | | | | KR | 10-2021-0087450 | A | 12 July 2021 |
| | | | | US | 11611763 | B2 | 21 March 2023 |
| | | | | US | 2023-0283786 | A1 | 07 September 2023 |
| | | | | WO | 2020-094054 | A1 | 14 May 2020 |
| KR | 10-2022-0038791 | A | 29 March 2022 | CN | 113784138 | A | 10 December 2021 |
| | | | | EP | 4037318 | A1 | 03 August 2022 |
| | | | | JP | 2024-063099 | A | 10 May 2024 |
| | | | | JP | 7511631 | B2 | 05 July 2024 |
| | | | | US | 2022-0295094 | A1 | 15 September 2022 |
| | | | | WO | 2021-057579 | A1 | 01 April 2021 |
| US | 2022-0408082 | A1 | 22 December 2022 | CN | 114641994 | A | 17 June 2022 |
| | | | | EP | 4055822 | A1 | 14 September 2022 |
| | | | | JP | 2023-500503 | A | 06 January 2023 |
| | | | | WO | 2021-089455 | A1 | 14 May 2021 |
| KR | 10-2022-0063312 | A | 17 May 2022 | CN | 117014627 | A | 07 November 2023 |
| | | | | CN | 117014627 | B | 02 July 2024 |
| | | | | EP | 3942824 | A1 | 26 January 2022 |
| | | | | JP | 2023-089255 | A | 27 June 2023 |
| | | | | JP | 7269371 | B2 | 08 May 2023 |
| | | | | KR | 10-2021-0131456 | A | 02 November 2021 |
| | | | | KR | 10-2399229 | B1 | 17 May 2022 |
| | | | | US | 2022-0046249 | A1 | 10 February 2022 |
| | | | | WO | 2020-220048 | A1 | 29 October 2020 |

Form PCT/ISA/210 (patent family annex) (July 2022)